# EUROPEAN PATENT SPECIFICATION

(11) **EP 4 148 495 B1**
(45) Date of publication and mention of the grant of the patent: **12.11.2025**
(21) Application number: 21799921.8
(22) Date of filing: 07.05.2021
(51) Int. Cl.: C08L 67/02, C08J 3/12, C08K 3/04, C08K 5/00, C08K 5/134, C08K 7/14

(54) **GALVANO-TYPE LASER WELDING RESIN COMPOSITION, MOLDED ARTICLE, GALVANO-TYPE LASER WELDING KIT, ONBOARD CAMERA COMPONENT, ONBOARD CAMERA MODULE, UV RAY EXPOSURE BODY, AND METHOD FOR MANUFACTURING MOLDED ARTICLE**
GALVANO-LASERSCHWEISSHARZZUSAMMENSETZUNG, FORMKÖRPER, GALVANO-LASERSCHWEISSKIT, BORDKAMERAMODUL, UV-STRAHLENBELICHTUNGSKÖRPER UND VERFAHREN ZUR HERSTELLUNG
COMPOSITION DE RÉSINE DE SOUDAGE LASER DE TYPE GALVANOMÉTRIQUE, ARTICLE MOULÉ, KIT DE SOUDAGE LASER DE TYPE GALVANOMÉTRIQUE, COMPOSANT DE CAMÉRA EMBARQUÉ, MODULE DE CAMÉRA EMBARQUÉ, CORPS D'EXPOSITION AUX RAYONS UV ET PROCÉDÉ DE FABRICATION D'ARTICLE MOULÉ

(30) Priority: 07.05.2020 JP 2020082231
(43) Date of publication of application: 15.03.2023
(73) Proprietor: MITSUBISHI CHEMICAL CORPORATION, Tokyo 100-8251 (JP)
(72) Inventor: HIWATASHI, Yuki, Hiratsuka-shi, Kanagawa 254-0016 (JP); TAKEUCHI, Rina, Hiratsuka-shi, Kanagawa 254-0016 (JP)
(74) Representative: Hoffmann Eitle
(86) International application number: PCT/JP2021/017449
(87) International publication number: WO 2021/225153

(56) References cited:
- EP-A1- 2 949 703
- EP-A1- 3 828 235
- EP-A1- 4 234 631
- WO-A1-2017/146196
- WO-A1-2019/216368
- WO-A1-2019/216368
- WO-A1-2020/022208
- WO-A1-2020/022208
- WO-A1-2021/225154

## Description

### TECHNICAL FIELD

This invention relates to a resin composition for Galvano-scanning laser welding, a formed article, a kit for Galvano-scanning laser welding, a car-borne camera component, a car-borne camera module, a UV exposed article, and, a method for manufacturing a formed article.

### BACKGROUND ART

Thermoplastic resin, represented by polybutylene terephthalate resin, excels in mechanical strength, chemical resistance and electrical insulation, and also in heat resistance, formability, and recycling efficiency, thus has therefore been widely used for components for various equipment.

Recent increasing trend relates to a welding process aimed at more efficient productivity, for which laser welding has been increasingly employed for its small influence on electronic components. For example, Patent Literature 1 discloses a resin composition for laser welding used for laser light-assisted welding, the resin composition includes: (A) 100 parts by mass of a thermoplastic polyester-based resin that contains at least one of polybutylene terephthalate homopolymer, polybutylene terephthalate copolymer, polyethylene terephthalate resin or polycarbonate resin; (B) 0.0005 to 0.5 parts by mass of nigrosin; and (C) 0.01 to 2 parts by mass of a colorant that contains at least anthraquinone dye C1 having a maximum absorption within the wavelength range from 590 to 635 nm, perinone dye C2 having a maximum absorption within the wavelength range from 460 to 480 nm, and anthraquinone dye C3 having a maximum absorption within the wavelength range from 435 to 455 nm, whose mass ratio given by C1:C2:C3 = (24 to 41) : (24 to 39): (22 to 46), where C1, C2 and C3 totaling 100 parts by mass.
Patent Literature 2 concerns a polybutylene terephthalate resin composition comprising a thermoplastic resin containing a polybutylene terephthalate resin and, per 100 parts by mass of the thermoplastic resin, from 0 to 30 parts by mass of an elastomer, from 0.3 to 4 parts by mass of an epoxy compound, from 15 to 80 parts by mass of a reinforcing filler and from 1 to 15 parts by mass of a masterbatch containing a silicone compound with a weight-average molecular weight of 10,000 to 80,000 and a thermoplastic resin.
Patent Literature 3 concerns thermoplastic moulding compounds containing A) 30 to 100% by weight of a polyester made up of 70 to 99.99% by weight of at least one polyalkylene terephthalate A1) different from A2), based on 100% of A) and 0.01 to 30% by weight of a polyethylene terephthalate A2).
Patent Literature 4 describes a resin composition containing a polyamide resin, a maleic anhydride-modified polyphenylene ether-based resin, a phosphazene-based flame retardant, a zinc metal oxide and a light transmitting dye.

### CITATION LIST

### PATENT LITERATURE

[Patent Literature 1] JP 6183822 B
[Patent Literature 2] WO 2020/022208 A1
[Patent Literature 3] EP 2 949 703 A1
[Patent Literature 4] WO 2019/216368 A1

### SUMMARY OF THE INVENTION

### TECHNICAL PROBLEM

Shape of recent laser-welded article has been becoming more intricated and diversified. Even a single laser-welded member often has the thickness and transmittance locally variable. This sort of welded member is necessarily laser-weldable under broad conditions for laser irradiation.

This invention is aimed at solving the issue, and is to provide a resin composition that is laser-weldable under broad conditions of laser irradiation, as well as to provide a formed article, a kit, a car-borne camera component, a car-borne camera module and a method for manufacturing the formed article with use of such resin composition.

### SOLUTION TO PROBLEM

The present inventors conducted research to address the above-mentioned problems, and as a result, discovered that the above problems could be solved by blending a reactive compound with a thermoplastic resin and using of Galvano-scanning laser welding. Specifically, the problems described above are solved by the following means.
<1> A resin composition for Galvano-scanning laser welding, containing 0.1 to 20 parts by mass of a reactive compound, per 100 parts by mass of a thermoplastic resin, wherein the reactive compound contains an epoxy group-containing elastomer.
<2> The resin composition of <1>, wherein the epoxy group-containing elastomer demonstrates a melt flow rate (MFR), measured in compliance with JIS K7210 at 190°C under 2.16 kgf load, of smaller than 10 g/10 min.
<3> The resin composition of <1> or <2>, wherein the thermoplastic resin contains a polyester-based resin.
<4> The resin composition of <3>, wherein the polyester-based resin contains polybutylene terephthalate resin.
<5> The resin composition of <3> or <4>, further containing a polycarbonate resin.
<6> The resin composition of any one of <1> to <5>, further containing an inorganic filler.
<7> The resin composition of <6>, wherein the inorganic filler contains a glass fiber.
<8> The resin composition of <1> to <7>, further containing a colorant .
<9> The resin composition of <8>, wherein the colorant is a light-transmissive colorant .
<10> The resin composition of <9>, wherein the light-transmissive colorant contains a black colorant and/or a black colorant composition.
<11> The resin composition of <19> or <10>, demonstrating, when injection-molded into a 60 mm×60 mm×1.5 mm specimen, a difference between transmittance values of 1064 nm wavelength light, measured at positions 15 mm and 45 mm away from a gate, of 2.1% or larger.
<12> The resin composition of <8>, wherein the colorant is a light-absorptive colorant .
<13> The resin composition of <12>, wherein the light-absorptive colorant contains carbon black.
<14> A formed article formed of the resin composition described in any one of <1> to <13>.
<15> A kit for Galvano-scanning laser welding, comprising a transmissive resin composition and a light-absorptive resin composition, and
   at least either the transmissive resin composition or the light-absorptive resin composition being the resin composition described in any one of <1> to <13>.
<16> The kit for Galvano-scanning laser welding of <15>, wherein the transmissive resin composition is the resin composition described in any one of <1> to <11>, and the light-absorptive resin composition is the resin composition described in <12> or <113>.
<17> A car-borne camera component formed of the resin composition described in any one of claims <1> to <13>, or formed of the kit described in <15> or <16>.
<18> A car-borne camera module comprising the car-borne camera component described in <17>.
<19> A UV exposed article formed of the resin composition described in any one of <1> to <13>, or formed of the kit described in <15> or <16>.
<20> The UV exposed article of <19>, being a car-borne camera component, a case of millimeter-wave radar for in-vehicle and/or outside-vehicle installation, a case of electric parking brake, or n case of a sensor case.
<21> A method for manufacturing a formed article, the method comprising welding a transmissive resin member and an absorptive resin member by Galvano-scanning laser welding,
   at least either the transmissive resin member or the absorptive resin member being formed of the resin composition described in any one of <1> to <13>.
<22> The method for manufacturing a formed article of <21>, wherein the transmissive resin member is a transmissive resin member formed of the resin composition described in any one of <1> to <11>, and the absorptive resin member is an absorptive resin member formed of the resin composition described in <12> or <13>.

### ADVANTAGEOUS EFFECTS OF INVENTION

This invention is the first to provide a resin composition that is laser-weldable under broad conditions of laser irradiation, as well as to provide a formed article, a kit for Galvano-scanning laser welding, a car-borne camera component, a car-borne camera module, a UV exposed article, and, a method for manufacturing the formed article.

### BRIEF DESCRIPTION OF DRAWINGS

[Fig. 1] A graph 1 illustrating relations between irradiation energy and weld strength in Examples and Comparative Example.
[Fig. 2] A graph 2 illustrating relations between irradiation energy and weld strength in Example and Comparative Example.
[Fig. 3] A schematic drawing illustrating a test specimen used for measuring laser weld strength in Example.
[Fig. 4] A schematic drawing illustrating a test specimen used for measuring laser weld strength in Example.
[Fig. 5] A schematic drawing illustrating a test specimen used for measuring laser weld strength in Example.
[Fig. 6] A schematic drawing illustrating a method for measuring laser weld strength in Example.
[Fig. 7] A schematic drawing illustrating a method for measuring laser weld strength in Example.

### DESCRIPTION OF EMBODIMENTS

Embodiments for carrying out the invention (simply referred to as "this embodiment", hereinafter) will be detailed below. The embodiments below are merely illustrative, so that this invention is not limited solely to these embodiments.

Note that all numerical ranges given in this patent specification, with "to" preceded and succeeded by numerals, are used to represent the ranges including these numerals respectively as the lower and upper limit values.

Various physical properties and characteristic values mentioned herein are those demonstrated at 23°C, unless otherwise specifically noted.

Note that "parts by mass" in this patent specification denotes relative amount of component, and "% by mass" denotes absolute amount of component.

The resin composition of this embodiment is a resin composition for Galvano-scanning laser welding, and is featured by containing 0.1 to 20 parts by mass of a reactive compound, per 100 parts by mass of a thermoplastic resin, wherein the reactive compound contains an epoxy group-containing elastomer. With use of Galvano-scanning laser welding, and with the reactive compound blended therein, the resin composition will become laser-weldable under broader conditions for laser irradiation. Galvano-scanning enables pinpointed high-speed irradiation of laser light, by pivoting two mirrors aligned on the X-axis and the Y-axis, or three mirrors aligned on the X-axis, Y-axis, and Z-axis. This enables laser irradiation uniformly over the entire range of weld portion, thus heating the entire range almost at a time, before the weld portion can cool, and is presumably less likely to degrade strength due to partial unevenness of welding. This presumably broadens the welding conditions. Moreover, with the reactive compound blended therein, the entire range of weld interface may be heated by laser irradiation, and allows reaction between the reactive compounds (preferably epoxy group of the reactive compound) contained in both of the transmissive resin member and the absorptive resin member to proceed, thus enhancing the weld strength. Being made laser-weldable under broad conditions for laser irradiation, the resin composition will become applicable to a case where the member to be laser-welded has locally variable thickness or transmittance.

The resin composition of this embodiment may be a transmissive resin composition for forming a member (transmissive resin member) placed on the side where the laser light is irradiated during the laser welding, or may be a light-absorptive resin composition for forming a member (absorptive resin member) placed on the side where the laser light is absorbed. In particular, both of the laser-transmissive resin composition and the light-absorptive resin composition are preferably the resin composition of this embodiment. The laser irradiation will be detailed later.

The resin composition of this embodiment will be explained below.

### <Thermoplastic Resin>

The resin composition of this embodiment contains a thermoplastic resin.

The thermoplastic resin is exemplified by polyester-based resin, polycarbonate resin, polystyrene-based resin, acrylic resin, polyacetal resin, polyphenylene oxide resin, polyphenylene sulfide resin, polysulfone resin, polyether sulfone resin, polyether imide resin, polyether ketone resin, polyolefin resin, and polyamide resin. Among them, polyester-based resin, polycarbonate resin, and polystyrene-based resin are preferred, and polyester-based resin and polycarbonate resin are further preferred.

The thermoplastic resin contained in the resin composition of this embodiment may partially function as an elastomer. Note, however, that the elastomer having epoxy group in this embodiment is classified into the reactive compound described later.

A first embodiment of the thermoplastic resin relates to a thermoplastic resin that contains a polyester-based resin. With the polyester-based resin contained therein, the reactive compound becomes more likely to react with the terminal carboxy group during irradiation of laser light, making the weld strength tend to improve.

In the first embodiment of the thermoplastic resin, the polyester-based resin more preferably contains polybutylene terephthalate resin. With the polyethylene terephthalate resin contained therein, the reactive compound will tend to be more reactive.

In the first embodiment, total content of the polyester-based resin, out of the thermoplastic resin contained in the resin composition, and the optional elastomer is preferably 80% by mass or more, more preferably 85% by mass or more, even more preferably 90% by mass or more, yet more preferably 95% by mass or more, and furthermore preferably 97% by mass or more.

A second embodiment of the thermoplastic resin relates to a thermoplastic resin that contains the polyester-based resin, and further contains a polycarbonate resin. With the polycarbonate resin contained therein, the formed article will have increased transmittance, the reactive compound at or around the weld interface will become more reactive even under small irradiation energy of laser light, making the weld strength tend to further improve. With the polycarbonate resin, whose glass transition temperature is intrinsically high, contained therein, the formed article will be further less likely to fade during weathering test or after left outdoors for a long term. The polyester-based resin more preferably contains polybutylene terephthalate resin. In the second embodiment, mass proportion of the polyester-based resin and the polycarbonate resin is preferably (51 to 99): (49 to 1), more preferably (60 to 95): (40 to 5), even more preferably (70 to 90): (30 to 10), and yet more preferably (75 to 85): (25 to 15).

In the second embodiment, total content of the polyester-based resin and the polyester-based resin, out of the thermoplastic resin contained in the resin composition, and the optional elastomer is preferably 80% by mass or more, more preferably, 85% by mass or more, even more preferably 90% by mass or more, yet more preferably 95% by mass or more, and furthermore preferably 97% by mass or more.

A third embodiment of the thermoplastic resin relates to the thermoplastic resin of the first embodiment or the second embodiment, further containing a thermoplastic resin that can function as an elastomer.

Note now that the thermoplastic resin that can function as an elastomer conceptually excludes any of those applicable to the reactive compound described later.

### <<Polyester-Based Resin>>

The polyester-based resin used in this embodiment, although the type of which is not specifically limited, is exemplified by polybutylene terephthalate resin and polyethylene terephthalate resin. Polybutylene terephthalate resin is preferred.

The polybutylene terephthalate resin is obtainable by polycondensation between terephthalic acid as a major component of the acid component, and 1,4-butanediol as a major component of the diol component. "Terephthalic acid as a major component of the acid component" means that 50% by mass or more of the acid component is attributable to terephthalic acid, wherein the percentage is more preferably 60% by mass or larger, more preferably 70% by mass or larger, even more preferably 80% by mass or larger, and may be 90% by mass or larger, and even may be 95% by mass or larger. Meanwhile, "1,4-butane diol as a major component of the diol component" means that 50% by mass or more of the diol component is attributable to 1,4-butane diol, wherein the percentage is more preferably 60% by mass or larger, even more preferably 70% by mass or larger, yet more preferably 80% by mass or larger, and may be 90% by mass or larger, and even may be 95% by mass or larger.

Other acid component, when contained in the polybutylene terephthalate resin, is exemplified by isophthalic acid and dimer acid. Meanwhile, other diol component, when contained in the polybutylene terephthalate resin, is exemplified by polyalkylene glycol such as polytetramethylene glycol (PTMG).

In a case where a product copolymerized with polytetramethylene glycol is used as the polybutylene terephthalate resin, the proportion of the tetramethylene glycol component in the copolymer is preferably 3 to 40% by mass, more preferably 5 to 30% by mass, and even more preferably 10 to 25% by mass. With such proportion of copolymerization, the laser weldability and the heat resistance will tend to be balanced more suitably and desirably.

In a case where the polybutylene terephthalate copolymerized with dimer acid is used as the polybutylene terephthalate resin, proportion of the dimer acid component relative to all carboxylic acid components is preferably 0.5 to 30 mol% in terms of carboxylic acid group, more preferably 1 to 20 mol%, and even more preferably 3 to 15 mol%. With such proportion of copolymerization, balance among the laser weldability, long-term heat resistance and toughness will tend to improve desirably.

In a case where polybutylene terephthalate copolymerized with isophthalic acid is used as the polybutylene terephthalate resin, proportion of isophthalic acid component relative to all carboxylic acid components is preferably 1 to 30 mol% in terms of carboxylic acid group, more preferably 1 to 20 mol%, and even more preferably 3 to 15 mol%. With such proportion of copolymerization, balance among the laser weldability, heat resistance, injection moldability, and toughness will tend to improve desirably.

The polybutylene terephthalate resin used in this embodiment is preferably a resin (polybutylene terephthalate homopolymer), in which 90% by mass or more of the acid component is attributable to terephthalic acid, and 90% by mass or more of the diol component is attributable to 1,4-butanediol; polybutylene terephthalate resin copolymerized with polytetramethylene glycol; or polybutylene terephthalate resin copolymerized with isophthalic acid.

The polybutylene terephthalate resin is preferably any of those having an intrinsic viscosity of 0.5 to 2 dL/g. Any of those having an intrinsic viscosity within the range from 0.6 to 1.5 dL/g is more preferred, form the viewpoint of formability and mechanical characteristics.
With use of the resin having an intrinsic viscosity of 0.5 dL/g or larger, the obtainable formed article will tend to further improve the mechanical strength. Meanwhile, with use of any of those having an intrinsic viscosity of 2 dL/g or smaller, the polybutylene terephthalate resin will tend to have improved fluidity, improved formability, and further improved laser weldability.

Note now, the intrinsic viscosity is measured in a 1:1 (mass ratio) mixed solvent of tetrachloroethane and phenol, at 30°C.

In a case where two or more kinds of polybutylene terephthalate resin are contained, the intrinsic viscosity is given by intrinsic viscosity of the mixture.

Terminal carboxy group content of the polybutylene terephthalate resin may be properly selected and determined, which is usually 60 eq/ton or less, preferably 50 eq/ton or less, and even more preferably 30 eq/ton or less. With the terminal carboxy group content adjusted to 50 eq/ton or less, the polybutylene terephthalate will be more effectively suppressed from causing degassing during melt forming. The lower limit value of the terminal carboxy group content, although not specifically limited, is usually 5 eq/ton or below.

When two or more kinds of the polybutylene terephthalate resin are contained, the terminal carboxy group content is defined by the terminal carboxy group content of the mixture.

The terminal carboxy group content of the polybutylene terephthalate resin is determined by dissolving 0.5 g of polybutylene terephthalate resin into 25 mL of benzyl alcohol, and titrating the solution with a 0.01 mol/L sodium hydroxide solution in benzyl alcohol. Method for adjusting the terminal carboxy group content may be any of known methods, which are exemplified by a method for adjusting material loading ratio for polymerization, method for controlling polymerization conditions including polymerization temperature and decompression method, and method for reacting a terminal blocker.

The polyethylene terephthalate resin used in this embodiment is obtainable by polycondensation between terephthalic acid as a major component of the acid component, and, ethylene glycol as a major component of the diol component. "Terephthalic acid as a major component of the acid component" means that 50% by mass or more of the acid component is attributable to terephthalic acid, wherein the percentage is preferably 60% by mass or larger, more preferably 70% by mass or larger, even more preferably 80% by mass or larger, may be 90% by mass or larger, and even may be 95% by mass or larger. "Ethylene glycol as a major component of the diol component" means that 50% by mass or more of the diol component is attributable to ethylene glycol, wherein the percentage is preferably 60% by mass or larger, even more preferably 70% by mass or larger, yet more preferably 80% by mass or larger, may be 90% by mass or larger, and even may be 95% by mass or larger.

Other acid component, when contained in the polyethylene terephthalate resin, is exemplified by phthalic acid, isophthalic acid, naphthalenedicarboxylic acid, 4,4'-diphenylsulfonedicarboxylic acid, 4,4'-biphenyldicarboxylic acid, 1,4-cyclohexanedicarboxylic acid, 1,3-phenylenedioxy diacetic acid and structural isomers of these compounds; dicarboxylic acids such as malonic acid, succinic acid, and adipic acid, and derivatives of these compounds; and oxy acids such as *p-*hydroxybenzoic acid and glycolic acid, and derivatives of these compounds.

In a case where the polyethylene terephthalate resin contains other acid component, such other diol component is exemplified by aliphatic glycol such as 1,2-propanediol, 1,3-propanediol, 1,4-butanediol, pentamethylene glycol, hexamethylene glycol, and neopentyl glycol; alicyclic glycol such as cyclohexanedimethanol; and aromatic dihydroxy compound derivatives such as bisphenol A and bisphenol S.

The polyethylene terephthalate resin may further be co-polymerized with a branching component that is exemplified by trifunctional ester-forming acid such as tricarballylic acid, trimesic acid, and trimellitic acid; tetrafunctional ester-forming acid such as pyromellitic acid; trifunctional or tetrafunctional ester-forming alcohol such as glycerin, trimethylolpropane and pentaerythritol, whose amount is 1.0 mol% or less, more preferably 0.5 mol% or less, and even more preferably 0.3 mol% or less.

The polyethylene terephthalate resin preferably has a limiting viscosity of 0.3 to 1.5 dL/g, which is more preferably 0.3 to 1.2 dL/g, and even more preferably 0.4 to 0.8 dL/g.

Note that intrinsic viscosity of the polyethylene terephthalate resin is measured at 30°C, in a 1:1 (ratio by mass) mixed solvent of tetrachloroethane and phenol.

The polyethylene terephthalate resin preferably has a terminal carboxy group concentration of 3 to 60 eq/ton, which is more preferably 5 to 50 eq/ton, and even more preferably 8 to 40 eq/ton. With the terminal carboxy group concentration adjusted to 60 eq/ton or below, the resin will be less likely to cause degassing during melt forming of the resin material, and the obtainable formed article will have improved mechanical strength, meanwhile with the terminal carboxy group concentration adjusted to 3 eq/ton or above, the obtainable formed article will tend to have improved heat resistance, residence heat stability and hue, which is desirable.

The terminal carboxy group concentration of the polyethylene terephthalate resin is determined by dissolving 0.5 g of polyethylene terephthalate resin into 25 mL of benzyl alcohol, and titrating the solution with a 0.01 mol/L sodium hydroxide solution in benzyl alcohol.

### <<Polycarbonate Resin>>

The polycarbonate resin used in this embodiment may be any of known polycarbonate resins. The polycarbonate resin is an optionally branched thermoplastic polymer or copolymer, usually obtainable by reacting dihydroxy compound, occasionally together with a small amount of polyhydroxy compound, with phosgene or carbonic acid diester. Method for producing the polycarbonate resin is not specifically limited, and any of those produced by known methods including phosgene method (interfacial polymerization) or melt polymerization (transesterification) may be used. The polycarbonate resin produced by the melt polymerization is preferred, from the viewpoint of laser transmittance and laser weldability.

The dihydroxy compound used as the raw material is preferably an aromatic dihydroxy compound, which is exemplified by 2,2-bis(4-hydroxyphenyl)propane (or, bisphenol A), tetramethylbisphenol A, bis(4-hydroxyphenyl)-*p*-diisopropyl benzene, hydroquinone, resorcinol, and 4,4-dihydroxybiphenyl. Bisphenol A is preferred. Also the aromatic dihydroxy compound, having one or more tetraalkylphosphonium sulfonates bound thereto, may be used.

Among the aforementioned polycarbonate resins, preferred is aromatic polycarbonate resin derived from 2,2-bis(4-hydroxyphenyl) propane, or, aromatic polycarbonate copolymer derived from 2,2-bis(4-hydroxyphenyl)propane and other aromatic dihydroxy compound. The polycarbonate resin may alternatively be a copolymer copolymerized with a polymer or oligomer having a siloxane structure. Still alternatively, two or more kinds of the aforementioned polycarbonate resins may be mixed for use.

The polycarbonate resin preferably has a viscosity-average molecular weight of 5000 to 30000, which is more preferably 10000 to 28000, and even more preferably 14000 to 24000. With use of the polycarbonate resin having a viscosity-average molecular weight of 5000 or larger, the obtainable formed article will tend to improve the mechanical strength. Meanwhile, with use of the polycarbonate resin having a viscosity-average molecular weight of 30000 or smaller, the resin composition will have improved fluidity, and tend to further improve the formability or laser weldability.

Note that the viscosity-average molecular weight [Mv] of the polycarbonate resin is determined by converting solution viscosity measured at 25°C in methylene chloride used as a solvent.

### <<Styrene-Based Resin>>

A styrene-based resin used in this embodiment is a polymer having a compound with a styrene skeleton as the major component. The phrase "having a compound with a styrene skeleton as a major component" means that 50% by mass or more of the raw material monomer is attributable to the compound with a styrene skeleton, wherein the percentage is preferably 60% by mass or larger, more preferably 70% by mass or larger, even more preferably 80% by mass or larger, may be 90% by mass or larger, and even may be 95% by mass or larger.

The compound with a styrene skeleton is exemplified by styrene, α-methylstyrene, paramethylstyrene, vinyltoluene, and vinylxylene, and is preferably styrene. The compound with a styrene skeleton is represented by polystyrene (PS).

The styrene-based resin usable herein may also be a copolymer that contains the compound with a styrene skeleton, copolymerized with other monomer. Representative examples include acrylonitrile-styrene copolymer (AS resin) obtainable by copolymerizing styrene with acrylonitrile, and maleic anhydride-styrene copolymer (maleic anhydride-modified polystyrene resin) obtainable by copolymerizing styrene with maleic anhydride.

Also a rubber-containing styrene resin, having a rubber component copolymerized therewith or blended therein, may be preferably used as the styrene-based resin. The rubber component is exemplified by conjugated diene-based hydrocarbon such as butadiene, isoprene, and 1,3-pentadiene. Butadiene-based rubber is preferably used in this embodiment.

The amount of the rubber component, when copolymerized or blended, is usually 1% by mass or more and less than 50% by mass of all segments of the styrene-based resin, preferably 3 to 40% by mass, more preferably 5 to 30% by mass, and even more preferably 5 to 20% by mass.

The rubber component-containing styrene-based resin is preferably rubber-containing polystyrene, more preferably butadiene rubber-containing polystyrene, and particularly preferably high-impact polystyrene (HIPS) from the viewpoint of toughness.

The styrene-based resin is preferably polystyrene, acrylonitrile-styrene copolymer (AS resin), butadiene rubber-containing polystyrene or maleic anhydride-modified polystyrene. Among them, polystyrene and high-impact polystyrene (HIPS) are preferred.

The styrene-based resin preferably has a mass-average molecular weight, measured by GPC, of 50000 to 500000, more preferably 100000 to 400000, and particularly preferably 150000 to 300000. With the mass-average molecular weight adjusted to 50000 or larger, the formed article will be effectively suppressed from causing bleed-out, will be less likely to emit decomposition gas, and will tend to improve the weld strength. Meanwhile, with the mass-average molecular weight adjusted to 500000 or smaller, the resin composition will have improved fluidity, and will tend to have improved laser-weld strength.

### <<Other Elastomer>>

The resin composition of this embodiment may contain an elastomer other than the styrene-based resin, and contains a later-described elastomer having epoxy group.

The elastomer is exemplified by thermoplastic elastomer having been blended as a part of the thermoplastic resin, for the purpose of improving impact resistance of a formed article obtainable from the resin composition, for which applicable is rubber polymer, or rubber polymer copolymerized with a compound reactive therewith.

A first embodiment of such other elastomer is exemplified by copolymer of ethylene and unsaturated carboxylic ester (ethylene-methacrylate copolymer, ethylene-butyl acrylate copolymer, etc.); copolymer of ethylene and aliphatic vinyl compound; terpolymer of ethylene, propylene and non-conjugated diene; acrylic rubber [polybutyl acrylate, poly(2-ethylhexyl acrylate), butyl acrylate-2-ethylhexyl acrylate copolymer, etc.]; polybutadiene; polyisoprene; diene-based copolymer (styrene-butadiene copolymer, acrylonitrile-butadiene copolymer, acrylic-butadiene rubber, etc.); copolymer of ethylene and α-olefin having 3 or more carbon atoms (ethylene-propylene copolymer, ethylene-butene copolymer, ethylene-octene copolymer, etc.); and silicone-based rubber (polyorganosiloxane rubber, IPN-type composite rubber composed of polyorganosiloxane rubber and polyalkyl (meth)acrylate rubber).

Note herein that (meth)acrylate means acrylate and methacrylate, and (meth)acrylic acid means acrylic acid and methacrylic acid.

A second embodiment of such other elastomer relates to a core/shell type elastomer. With use of the core/shell type elastomer, adhesion with the thermoplastic resin such as polybutylene terephthalate resin will be improved, and the weld strength will tend to improve, owing to the reactive compound contained in the core layer. The core/shell type elastomer is exemplified by a copolymer having monomer component grafted to a core polymer.

The core is preferably made of a rubber polymer, which is exemplified by acrylonitrile-acrylic rubber polymer-styrene graft copolymer (ASA resin), methyl methacrylate-acrylic rubber polymer-styrene graft copolymer (MSA resin), methyl methacrylate-acrylonitrile-acrylic rubber polymer-styrene graft copolymer (MASA resin), and polyorganosiloxane-containing rubber polymer. Polyorganosiloxane-containing rubber polymer is preferred.

The polyorganosiloxane-containing rubber polymer usually has a glass transition temperature of 0°C or lower, preferably -20°C or lower, and even more preferably -30°C or lower. The rubber component is not specifically limited so far as it contains the polyorganosiloxane rubber, and is exemplified by polyorganosiloxane rubber, and (IPN-type) composite rubber formed between polyorganosiloxane rubber and polyalkyl acrylate rubber.

The monomer component copolymerizable by grafting with the core is exemplified by aromatic vinyl compound; vinyl cyanide compound; (meth)acrylate ester compound; (meth)acrylate compound; epoxy group-containing (meth)acrylate ester compound such as glycidyl (meth)acrylate; maleimide compound such as maleimide, N-methylmaleimide, and N-phenylmaleimide; and α,β-unsaturated carboxylic acid compound such as maleic acid, phthalic acid, and itaconic acid, and anhydrides thereof (e.g., maleic anhydride).

Specific examples of the rubber polymer, the aromatic vinyl compound, the vinyl cyanide compound, and the (meth)acrylate ester compound may be understood referring to the description in paragraphs [0042] to [0046] of JP 2019-059813 A.

The core/shell type elastomer is preferably a compound obtainable by grafting (meth)acrylate ester compound, to a polyorganosiloxane-containing rubber polymer (preferably, composite rubber formed of polyorganosiloxane rubber and polyalkyl acrylate rubber).

Melt flow rate (MFR) of the elastomer, measured in compliance with JIS K7210, at 190°C, under 2.16 kgf load is preferably 0.1 to 50 g/10 min, and more preferably 0.5 to 30 g/10 min. With the MFR adjusted within the aforementioned ranges, the resin composition will tend to have improved impact resistance, while effectively suppressing poor appearance.

### <<Blend Ratio and Content of Thermoplastic Resin>>

The resin composition in this embodiment preferably contains 10 to 90% by mass of a thermoplastic resin. Content of the thermoplastic resin in the resin composition is preferably 20% by mass or more, more preferably 30% by mass or more, even more preferably 40% by mass or more, and even may be 50% by mass or more. Meanwhile, content of the thermoplastic resin in the resin composition is preferably 85% by mass or less, and may be 80% by mass or less, 75% by mass or less, or 70% by mass or less.

In a particular case in this embodiment where a thermoplastic resin that functions as an elastomer (excluding those applicable to the reactive compound described later) is contained, the content thereof is preferably 1 part by mass or more, per 100 parts by mass of the thermoplastic resin that does not function as an elastomer (for example, polyester-based resin or polycarbonate resin), more preferably 5 parts by mass or more, and even more preferably 8 parts by mass or more. The upper limit value of the content of the thermoplastic resin that functions as an elastomer, per 100 parts by mass of the thermoplastic resin that does not function as an elastomer, is preferably 20 parts by mass or below, and more preferably 15 parts by mass or below.

The resin composition may contain only one kind of, or two or more kinds of the thermoplastic resin. When two or more kinds are contained, the total content preferably falls within the aforementioned ranges.

### <Reactive Compound>

the resin composition of this embodiment contains 0.1 to 20 parts by mass of a reactive compound, per 100 parts by mass of the thermoplastic resin. With the reactive compound contained therein, the weld strength will tend to be enhanced.

The reactive compound is preferably a compound capable of chemically reacting with a carboxy group or a hydroxy group that resides at the terminal of the polybutylene terephthalate resin, to cause crosslinking reaction or chain elongation. The reactive compound contains an epoxy group-containing elastomer and may contain one or more compound selected from the group consisting of carbodiimide compound, compound having oxazoline group (ring), compound having oxazine group (ring), compound having carboxy group, and compound having amido group. In particular in the resin composition of this embodiment, preferably 90% by mass or more of the reactive compound is attributable to the epoxy group-containing elastomer, wherein the percentage is more preferably 95% by mass or larger, and particularly preferably 99% by mass or larger.

### <<Epoxy Compound>>

The epoxy compound is an epoxy group-containing elastomer. With the epoxy compound contained therein, the conditions for laser irradiation will tend to be broadened.

For completeness, epoxy compounds other than an epoxy group-containing elastomer are described herein. Examples thereof are non-elastomers such as glycidyl compound, epoxy compound having aromatic ring, and alicyclic epoxy compound.

Examples of such epoxy compoundare specifically exemplified by aromatic ring-containing epoxy compounds such as bisphenol A-type epoxy compound (including bisphenol A diglycidyl ether), bisphenol F-type epoxy compound (including bisphenol F diglycidyl ether), biphenyl-type epoxy compound (including bis(glycidyloxy)biphenyl), resorcine-type epoxy compound (including resorcinol diglycidyl ether), novolac-type epoxy compound, glycidyl benzoate, diglycidyl terephthalate, and diglycidyl orthophthalate; (di)glycidyl ethers such as methylglycidyl ether, butyl glycidyl ether, 2-ethylhexyl glycidyl ether, decyl glycidyl ether, stearyl glycidyl ether, phenyl glycidyl ether, butylphenyl glycidyl ether, allyl glycidyl ether, neopentyl glycol diglycidyl ether, ethylene glycol diglycidyl ether, glycerin diglycidyl ether, and propylene glycol diglycidyl ether; paraffinic (e.g., saturated fatty acid-based) or olefinic (e.g., unsaturated fatty acid-based) (di)glycidyl esters such as glycidyl sorbate, diglycidyl adipate, epoxylated linseed oil, and epoxylated soybean oil; and alicyclic epoxy compounds such as vinyl cyclohexene dioxide, and dicyclopentadiene.

Among them, more preferred are bisphenol A-type epoxy compound, novolac-type epoxy compound, bisphenol F-type epoxy compound, and biphenyl-type epoxy compound; and particularly preferred is orthocresol/novolac-type epoxy resin (polyglycidyl ether compound of *o-*cresol/formaldehyde polycondensate).

Commercially available products include Joncryl ADR4368C (trade name: from BASF SE), Epikote 1003 (trade name: from Mitsubishi Chemical Corporation), and YDCN704 (trade name: from Nippon Steel & Sumikin Materials Co., Ltd.).

Such epoxy compound preferably has a mass-average molecular weight of 15000 or smaller, which is more preferably 10000 or smaller. The lower limit value of the mass-average molecular weight, although not specifically limited, is preferably 100 or above, and more preferably 500 or above. Within these ranges, the effect of this embodiment will tend to be demonstrated more effectively.

Such epoxy compound preferably has an epoxy equivalent of 100 g/eq or larger or 100 g/mol or larger, which is more preferably 150 g/eq or larger or 150 g/mol or larger. Meanwhile, the epoxy compound preferably has an epoxy equivalent of 1500 g/eq or smaller or 1500 g/mol or smaller, which is more preferably 900 g/eq or smaller or 900 g/mol or smaller, and even more preferably 800 g/eq or smaller or 800 g/mol or smaller.

With the epoxy equivalent controlled at or above the lower limit value, the weld strength or the hydrolysis resistance of the welded article will tend to improve. At or below the upper limit value, the fluidity will increase, making the resin composition more easily formable.

In the present invention, the epoxy compound contains an epoxy group-containing elastomer. With the epoxy group-containing elastomer contained therein, the obtainable formed article will tend to have increased impact resistance and laser weldability.

The epoxy group-containing elastomer preferably demonstrates a melt flow rate (MFR), measured in compliance with JIS K7210 at 190°C under 2.16 kgf load, of smaller than 10 g/10 min, which is more preferably smaller than 9 g/10 min, and particularly preferably smaller than 8 g/10 min. The lower limit value of MFR is preferably 1 g/10 min or above, and particularly preferably 2 g/10 min or above. With use of such elastomer, the impact resistance, hydrolysis resistance, and laser weldability tend to advantageously improve. With use of an elastomer having epoxy group, and having a specific MFR value, the obtainable formed article will have unreacted epoxy group retained therein, allowing the unreacted epoxy group and the carboxy group to react during the laser welding, and this presumably enhances the weld strength.

A first embodiment of the epoxy group-containing elastomer relates to a copolymer obtainable by copolymerizing α-olefin, glycidyl ester of α,β-unsaturated acid, and optional unsaturated monomer capable of copolymerizing with these compounds. Amount of use of the α-olefin and the glycidyl ester of α,β-unsaturated acid, relative to all copolymerizable components, is preferably 60% by mass or more.

The α-olefin is exemplified by ethylene, propylene, butene-1, and pentene-1. Two or more kinds of these compounds may be used. The glycidyl ester of α,β-unsaturated acid is exemplified by glycidyl acrylate, glycidyl methacrylate, glycidyl ethacrylate, and glycidyl itaconate. Two or more kinds of these compounds may be used. Vinyl-based monomer copolymerizable with the aforementioned components is exemplified by vinyl ethers; vinyl esters such as vinyl acetate and vinyl propionate; acrylate and methacrylate esters having methyl, ethyl, propyl or butyl groups; acrylonitrile; and styrene. Two or more kinds of these compounds may be used.

Preferred epoxy group-containing elastomer of the first embodiment is exemplified by ethylene/glycidyl methacrylate copolymer, ethylene/glycidyl methacrylate/vinyl acetate copolymer, ethylene/glycidyl methacrylate/alkyl acrylate copolymer, and ethylene/alkyl acrylate/vinyl acetate copolymer. In particular, preferred is ethylene/glycidyl methacrylate/alkyl acrylate (preferably butyl acrylate) copolymer, from the viewpoint of its excellent toughness, and of improving moist heat resistance and impact resistance of the formed article. The epoxy group-containing elastomer of the first embodiment is specifically exemplified by "Lotader" (registered trademark) AX8900 and AX8700, from Arkema S.A.

A second embodiment of the epoxy group-containing elastomer relates to a core/shell type elastomer. Use of the core/shell type elastomer, having a small molecular particle size and can therefore easily disperse in the polybutylene terephthalate-based resin, tends to enhance weld strength with the aid of a reaction participated by the reactive group. The core/shell type elastomer is exemplified by a copolymer having monomer components grafted to a polymer core.

The core is preferably made of a rubber polymer, which is exemplified by acrylonitrile-acrylic rubber polymer-styrene graft copolymer (ASA resin), methyl methacrylate-acrylic rubber polymer-styrene graft copolymer (MSA resin), methyl methacrylate-acrylonitrile-acrylic rubber polymer-styrene graft copolymer (MASA resin), and polyorganosiloxane-containing rubber polymer. Polyorganosiloxane-containing rubber polymer is preferred.

The polyorganosiloxane-containing rubber polymer preferably usually has a glass transition temperature of 0°C or lower, which is preferably-20°C or lower, and more preferably-30°C or lower. The rubber component is not specifically limited so far as it contains polyorganosiloxane rubber, and is exemplified by polyorganosiloxane rubber, and (IPN-type) composite rubber formed of polyorganosiloxane rubber and polyalkyl acrylate rubber.

The monomer component copolymerizable by grafting with the core is specifically exemplified by aromatic vinyl compound, vinyl cyanide compound, (meth)acrylate ester compound, (meth)acrylic acid compound, epoxy group-containing (meth)acrylate ester compound such as glycidyl (meth)acrylate; maleimide compound such as maleimide, N-methylmaleimide, N-phenylmaleimide; α,β-unsaturated carboxylic acid compound such as maleic acid, phthalic acid, and itaconic acid, and anhydride thereof (e.g., maleic anhydride, etc.).

Specific examples of the rubber polymer, aromatic vinyl compound, vinyl cyanide compound, and (meth)acrylate ester compound may be understood referring to the description in paragraphs [0042] to [0046] of JP 2019-059813 A.

The second embodiment of the epoxy group-containing elastomer is preferably a compound obtainable by grafting an epoxy group-containing (meth)acrylate ester compound, to a polyorganosiloxane-containing rubber polymer (preferably composite rubber composed of polyorganosiloxane rubber and polyalkyl acrylate rubber).

The second embodiment of the epoxy group-containing elastomer is specifically exemplified by "Metablen (registered trademark, the same will apply hereinafter) S-2002" and "Metablen S-2200" from Mitsubishi Rayon Co., Ltd.

Other epoxy compound applicable to this embodiment may be understood referring to the description in paragraphs [0060] to [0067] of JP 2019-019305 A.

### <<Carbodiimide Compound>>

In the resin composition of this embodiment, also a carbodiimide compound may be preferably used as the reactive compound. The carbodiimide compound has, in its molecule, a carbodiimide group (-N=C=N-). The carbodiimide compound applicable herein may be any of aliphatic carbodiimide compound having an aliphatic principal chain, alicyclic carbodiimide compound having an alicyclic principal chain, or aromatic carbodiimide compound having an aromatic principal chain. Among them, aliphatic carbodiimide compound that excels in reactivity with the polymer terminal is preferably used. The carbodiimide compound may be of either monomer-type or polymer-type. The polymer-type is preferred in this embodiment.

The aliphatic carbodiimide compound may be exemplified by diisopropylcarbodiimide, and dioctyldecylcarbodiimide.

The alicyclic carbodiimide compound is preferably exemplified by dicyclohexylcarbodiimide, and poly(4,4'-dicyclohexylmethane carbodiimide). Poly(4,4'-dicyclohexylmethane carbodiimide) is particularly preferred.

Commercial product may be exemplified by "Carbodilite" (product name; from Nisshinbo Chemical Inc.).

The aromatic carbodiimide compound is exemplified by mono or dicarbodiimide compound such as diphenylcarbodiimide, di-2,6-dimethylphenylcarbodiimide, N-triyl-N'-phenylcarbodiimide, di-*p-*nitrophenylcarbodiimide, di-*p*-aminophenylcarbodiimide, di-*p-*hydroxyphenylcarbodiimide, di-*p*-chlorophenylcarbodiimide, di-*p-*methoxyphenylcarbodiimide, di-3,4-dichlorophenylcarbodiimide, di-2,5-dichlorophenylcarbodiimide, di-o-chlorophenylcarbodiimide, *p*-phenylene-bis-di-o-triyl carbodiimide, *p*-phenylene-bis-dicyclohexyl carbodiimide, *p*-phenylene-bis-di-*p*-chlorophenylcarbodiimide, and ethylene-bis-diphenylcarbodiimide; and polycarbodiimide compound such as poly(4,4'-diphenylmethane carbodiimide), poly(3,5'-dimethyl-4,4'-biphenylmethane carbodiimide), poly(*p*-phenylene carbodiimide), poly(*m*-phenylene carbodiimide), poly(3,5'-dimethyl-4,4'-diphenylmethane carbodiimide), poly(naphthylene carbodiimide), poly(1,3-diisopropylphenylene carbodiimide), poly(1-methyl-3,5-diisopropylphenylene carbodiimide), poly(1,3,5-triethylphenylene carbodiimide) and poly(triisopropylphenylene carbodiimide). Two or more kinds of these compound may be used in combination.

The carbodiimide preferably has a mass-average molecular weight of 10000 or smaller, which is more preferably 4000 or smaller. The lower limit is preferably 100 or above, and more preferably 500 or above.

Content of carbodiimido group contained in the carbodiimide compound is preferably 100 g/mol or more, in terms of carbodiimide equivalent (weight of carbodiimide compound [g] that gives 1 mol of carbodiimido group), more preferably 200 g/mol or more, and more preferably 235 g/mol or more. The upper limit value is preferably 1000 g/mol or below, more preferably 800 g/mol or below, and even more preferably 650 g/mol or below. Use within the aforementioned range can stably control the reaction with the polymer.

### <<Compound Having Oxazoline Group (Ring)>>

The compound having oxazoline group (ring) may be exemplified by oxazoline, alkyl oxazoline (alkyl oxazoline having 1 to 4 carbon atoms, such as 2-methyloxazoline, and 2-ethyloxazoline), and bisoxazoline compound.

The bisoxazoline compound is exemplified by 2,2'-bis(2-oxazoline); 2,2'-bis(alkyl-2-oxazoline) [2,2'-bis(C₁₋₆ alkyl-2-oxazoline) such as 2,2'-bis(4-methyl-2-oxazoline), 2,2'-bis(4-ethyl-2-oxazoline), and 2,2'-bis(4,4-dimethyl-2-oxazoline), etc.]; 2,2'-bis(aryl-2-oxazoline) [2,2'-bis(4-phenyl-2-oxazoline), etc.]; 2,2'-bis(cycloalkyl-2-oxazoline) [2,2'-bis(4-cyclohexyl-2-oxazoline), etc.]; 2,2'-bis(aralkyl-2-oxazoline) [2,2'-bis(4-benzyl-2-oxazoline), etc.]; 2,2'-alkylenebis(2-oxazoline) [2,2'-C₁₋₁₀ alkylenebis-(2-oxazoline), such as 2,2'-ethylenebis-(2-oxazoline), 2,2'-tetramethylenebis-(2-oxazoline), etc.]; 2,2'-alkylenebis (alkyl-2-oxazoline) [2,2'-C₁₋₁₀ alkylenebis (C₁₋₆ alkyl-2-oxazoline) such as 2,2'-ethylenebis(4-methyl-2-oxazoline), and 2,2'-tetramethylenebis-(4,4-dimethyl-2-oxazoline), etc.]; 2,2'-arylenebis(2-oxazoline) [2,2'-(1,3-phenylene)bis-(2-oxazoline), 2,2'-(1,4-phenylene)bis-(2-oxazoline), 2,2'-(1,2-phenylene)bis-(2-oxazoline), 2,2'-diphenylenebis(2-oxazoline), etc.]; 2,2'-arylenebis(alkyl-2-oxazoline) [2,2'-phenylenebis-(C₁₋₆ alkyl-2-oxazoline), such as 2,2'-(1,3-phenylene)bis-(4-methyl-2-oxazoline), 2,2'-(1,4-phenylene)bis-(4,4-dimethyl-2-oxazoline), etc.]; 2,2'-aryloxyalkanebis-(2-oxazoline) [2,2'-9,9'-diphenoxyethanebis-(2-oxazoline), etc.]; 2,2'-cycloalkylenebis(2-oxazoline) [2,2'-cyclohexylenebis-(2-oxazoline), etc.]; N,N'-alkylenebis-(2-carbamoyl-2-oxazoline) [N,N'-C₁₋₁₀ alkylenebis- (2-carbamoyl-2-oxazoline) such as N,N'-ethylenebis-(2-carbamoyl-2-oxazoline), and N,N'-tetramethylenebis-(2-carbamoyl-2-oxazoline), etc.]; N,N'-alkylenebis-(2-carbamoyl-alkyl-2-oxazoline) [N,N'-C₁₋₁₀ alkylenebis- (2-carbamoyl-C₁₋₆ alkyl-2-oxazoline) such as N,N'-ethylenebis-(2-carbamoyl-4-methyl-2-oxazoline), and N,N'-tetramethylenebis-(2-carbamoyl-4,4-dimethyl-2-oxazoline), etc.]; and N,N'-arylenebis-(2-carbamoyl-2-oxazoline) [N,N'-phenylenebis-(2-carbamoyl-oxazoline), etc.].

The compound having oxazoline group also includes vinyl polymers having oxazoline group (Epocros RPS Series, RAS Series, and RMS Series, etc., from Nippon Shokubai Co., Ltd.). Among these oxazoline compounds, preferred is bisoxazoline compound.

### <<Compound Having Oxazine Group (Ring) »

Oxazine or bisoxazine compound may be used as the compound having oxazine group (ring).

The bisoxazine compound is exemplified by 2,2'-bis(5,6-dihydro-4H-1,3-oxazine); 2,2'-bis(alkyl-5,6-dihydro-4H-1,3-oxazine) [2,2'-bis(C₁₋₆ alkyl-5,6-dihydro-4H-1,3-oxazine) such as 2,2'-bis(4-methyl-5,6-dihydro-4H-1,3-oxazine), 2,2'-bis(4,4-dimethyl-5,6-dihydro-4H-1,3-oxazine), 2,2'-bis(4,5-dimethyl-5,6-dihydro-4H-1,3-oxazine), etc.]; 2,2'-alkylenebis-(5, 6-dihydro-4H-1, 3-oxazine) [2,2'-C₁₋₁₀ alkylenebis- (5, 6-dihydro-4H-1, 3-oxazine) such as 2,2'-methylenebis-(5,6-dihydro-4H-1,3-oxazine), 2,2'-ethylenebis-(5,6-dihydro-4H-1,3-oxazine), 2,2'-hexamethylenebis-(5,6-dihydro-4H-1,3-oxazine), etc.]; 2,2'-arylenebis-(5,6-dihydro-4H-1,3-oxazine) [2,2'-(1,3-phenylene)bis-(5,6-dihydro-4H-1,3-oxazine), 2,2'-(1,4-phenylene)bis-(5,6-dihydro-4H-1,3-oxazine), 2,2'-(1,2-phenylene)bis-(5,6-dihydro-4H-1,3-oxazine), 2,2'-naphthylenebis-(5,6-dihydro-4H-1,3-oxazine), 2,2'-diphenylenebis-(5,6-dihydro-4H-1,3-oxazine), etc.]; N,N'-alkylenebis-(2-carbamoyl-5,6-dihydro-4H-1,3-oxazine) [N,N'-C₁₋₁₀ alkylenebis-(2-carbamoyl-5,6-dihydro-4H-1,3-oxazine) such as N,N'-ethylenebis-(2-carbamoyl-5,6-dihydro-4H-1,3-oxazine), N,N'-tetramethylenebis-(2-carbamoyl-5,6-dihydro-4H-1,3-oxazine), etc.]; N,N'-alkylenebis-(2-carbamoyl-alkyl-5,6-dihydro-4H-1,3-oxazine) [N,N'-C₁₋₁₀ alkylenebis-(2-carbamoyl-C₁₋₆ alkyl-5,6-dihydro-4H-1,3-oxazine) such as N,N'-ethylenebis-(2-carbamoyl-4-methyl-5,6-dihydro-4H-1,3-oxazine), N,N'-hexamethylenebis-(2-carbamoyl-4,4-dimethyl-5,6-dihydro-4H-1,3-oxazine), etc.]; and N,N'-arylenebis-(2-carbamoyl-5,6-dihydro-4H-1,3-oxazine) [N,N'-phenylenebis-(2-carbamoyl-oxazine), etc.]. Among these oxazine compounds, bisoxazine compound is preferred.

### <<Compound Having Carboxy Group>>

The compound having carboxy group (carboxylic acid compound) is exemplified by formic acid, acetic acid, propionic acid, acrylic acid, methacrylic acid, oxalic acid, malonic acid, succinic acid, maleic acid, fumaric acid, adipic acid, benzoic acid, phthalic acid, terephthalic acid, lactic acid, malic acid, tartaric acid, diphenolic acid, benzenesulfonic acid, toluenesulfonic acid, dodecylbenzenesulfonic acid, nonylbenzenesulfonic acid, nitrobenzenesulfonic acid, cyanobenzenesulfonic acid, hydroxybenzenesulfonic acid, methylsulfonic acid, trifluoromethanesulfonic acid, trifluoroacetic acid, nitrobenzenecarboxylic acid, cyanobenzenecarboxylic acid, hydroxybenzenecarboxylic acid, hydroxyacetic acid, and salts of these acids.

### <<Compound Having Amido Group>>

The compound having amido group is exemplified by (meth)acrylamide, N-methylmethacrylamide, methylolated acrylamide, methylolated methacrylamide, ureido vinyl ether, β-ureidoisobutyl vinyl ether, and ureidoethyl acrylate.

### <<Content of Reactive Compound>>

The resin composition of this embodiment contains 0.1 to 20 parts by mass of a reactive compound, per 100 parts by mass of the thermoplastic resin.

Content of the reactive compound, when contained in the resin composition of this embodiment, is preferably 0.2 parts by mass or more, per 100 parts by mass of the thermoplastic resin, which is more preferably 0.3 parts by mass or more, even more preferably 0.4 parts by mass or more, yet more preferably 0.5 parts by mass or more, furthermore preferably 0.8 parts by mass or more, again furthermore preferably 1.0 part by mass or more, and particularly preferably 1.2 parts by mass or more. At or above the lower limit value, the weld strength will tend to improve. The upper limit value of the content of the reactive compound, per 100 parts by mass of the thermoplastic resin, is 18 parts by mass or below, more preferably 15 parts by mass or below, and even more preferably 10 parts by mass or below. At or below the upper limit value, the fluidity will tend to further improve, and the formability will tend to improve.

In the present invention where the resin composition of this embodiment contains, as the reactive compound, an elastomer having a reactive group (preferably, epoxy group), the content thereof is preferably 1 part by mass or more per 100 parts by mass of the thermoplastic resin, more preferably 5 parts by mass or more, even more preferably 7 parts by mass or more, and yet more preferably 8 parts by mass or more. At or above the lower limit value, the impact resistance and weld strength will tend to improve. Meanwhile, the upper limit value of the content of the reactive compound is preferably 20 parts by mass or below, per 100 parts by mass of the thermoplastic resin, more preferably 16 parts by mass or below, even more preferably 15 parts by mass or below, yet more preferably 12 parts by mass or below, and furthermore preferably 10 parts by mass or below. At or below the upper limit value, the formability will tend to improve, and strength of a base material of the laser-welded article will tend to be more easily retained.

The resin composition of this embodiment may contain only one kind of, or two or more kinds of the reactive compound. When two or more kinds are contained, the total content preferably falls within the aforementioned ranges.

### <Colorant >

The resin composition of this embodiment preferably contains a colorant .

In a case where the resin composition of this embodiment is used as the transmissive resin composition, the colorant preferably contains a light-transmissive colorant . Alternatively, in a case where the resin composition of this embodiment is used as the transmissive resin composition, the colorant is not necessarily contained. With the light-transmissive colorant contained therein, the transmissive resin member formed of the transmissive resin composition, and the absorptive resin member formed of the light-absorptive resin composition will have a unified color, and the design aesthetics will tend to improve.

On the other hand, in a case where the resin composition of this embodiment is used as the light-absorptive resin composition, the colorant contains a light-absorptive colorant . With the light-absorptive colorant contained therein, the resin composition can absorb the laser, thus enabling laser welding.

The colorant s will be detailed below.

### <<Light-Transmissive Colorant >>

The light-transmissive colorant is not specifically limited, so far as it allows the laser for laser welding to transmit up to a certain level or above, to which any of known colorants is applicable.

The light-transmissive colorant is defined by a colorant that makes a blend demonstrate a light transmittance of 20% or larger, when measured by the measurement method described later in EXAMPLES (Measurement of Counter Gate Side Transmittance), typically when 0.2% by mass of such colorant (colorant presumed to be a light-transmissive colorant ) is blended with a polybutylene terephthalate resin (for example, Novaduran (registered trademark) 5008), 30% by mass of glass fiber (for example, T-127 (trade name), from Nippon Electric Glass Co., Ltd.), totaling 100% by mass. With the light-transmissive colorant blended in this embodiment, the resin composition of this embodiment, when formed into 1.5 mm thick, can demonstrate a transmittance at 1064 nm wavelength of 20% or larger. The upper limit, although ideally 100%, may be 90% or smaller.

The light-transmissive colorant is suitably selectable depending on applications, without limitation on color. The light-transmissive colorant used in this embodiment is preferably black colorant and/or black colorant composition. The black colorant composition means a colorant composition that looks black, as a result of combination of two or more kinds of chromatic colorant of red, blue, green and so forth.

The light-transmissive colorant is usually dye.

A first embodiment of the black colorant composition relates to a mode that contains a green colorant and a red colorant . A second embodiment of the black colorant composition relates to a mode that contains a red colorant and a blue colorant and a yellow colorant .

The light-transmissive colorant is specifically exemplified by naphthalocyanine, aniline black, phthalocyanine, porphyrin, perinone, quaterrylene, azo, azomethine, anthraquinone, pyrazolone, squaric acid derivative, perylene, chromium complex, and immonium, wherein preferred are azomethine, anthraquinone, and perinone, and more preferred are anthraquinone and perinone.

Commercially available colorant is exemplified by Plast Yellow 8000, Plast Red M 8315, Plast Red 8370, and Oil Green 5602 from Arimoto Chemical Co., Ltd.; Macrolex Yellow 3G, Macrolex Red EG, and Macrolex Green 5B from LANXESS AG; and
KP Plast HK, KP Plast Red HG, KP Plast Red H2G, KP Plast Blue R, KP Plast Blue GR, and KP Plast Green G from KIWA Chemical Industry Co., Ltd.

Also the colorant described in JP 4157300 B, and the colorant described in JP 4040460 B are applicable.

The resin composition of this embodiment, when intended for use as the transmissive resin composition, may contain the light-transmissive colorant but not necessarily. From the viewpoint of design aesthetics, the light-transmissive colorant is preferably contained. More specifically, the transmissive resin composition of this embodiment contains 0.001 to 5 parts by mass of the light-transmissive colorant , per 100 parts by mass of the thermoplastic resin. The lower limit value of the content is preferably 0.01 parts by mass or above, more preferably 0.05 parts by mass or above, even more preferably 0.1 parts by mass or above, and yet more preferably 0.2 parts by mass or above. At or above the lower limit value, the formed article may be colored, and will have enhanced design aesthetics. The upper limit value of the content is preferably 3 parts by mass or below, more preferably 2 parts by mass or below, even more preferably 1 part by mass or below, yet more preferably 0.8 parts by mass or below, and furthermore preferably 0.5 parts by mass or below. At or below the upper limit value, the light-transmissive colorant may be effectively suppressed from bleeding out.

The resin composition of this embodiment may contain only one kind of, or two or more kinds of the light-transmissive colorant . When two or more kinds are contained, the total content preferably falls within the aforementioned ranges.

The transmissive resin composition usually contains substantially no light-absorptive colorant . The phrase "... contains substantially no ..." means that the content of the light-absorptive colorant , even if contained in the transmissive resin composition, is small enough so as not to inhibit transmission of the light for laser welding through the transmissive resin composition. The content is exemplified by less than 0.001 parts by mass, per 100 parts by mass of the thermoplastic resin.

Nigrosin is preferably not contained from the viewpoint of weatherability, whose content being preferably 5 ppm or less on the mass basis in the resin component, which is more preferably 3 ppm or less.

### <<Light-Absorptive Colorant >>

The light-absorptive colorant has a maximum absorption in the wavelength range of the light to be irradiated, typically in the wavelength range from 800 nm to 1100 nm.

The light-absorptive colorant is defined by a colorant that makes a blend demonstrate a light transmittance of smaller than 20%, and further 10% or smaller, when measured by the measurement method described later in EXAMPLES (Measurement of Counter Gate Side Transmittance), typically when 0.3 parts by mass of such colorant (colorant presumed to be a light-absorptive colorant ) is blended with a polybutylene terephthalate resin (for example, Novaduran (registered trademark) 5008), 30% by mass of glass fiber (for example, T-127 (trade name), from Nippon Electric Glass Co., Ltd), totaling 100% by mass.

The light-absorptive colorant is usually pigment.

The light-absorptive colorant is exemplified by black colorant such as carbon black, and white colorant such as titanium oxide or zinc sulfate. These colorant s may be used singly, or in combination of two or more kinds thereof. In particular, carbon black is preferably contained.

The carbon black is exemplified by furnace black, thermal black, channel black, lamp black and acetylene black, which may be used singly, or may be used in combination of two or more kinds.

The carbon black is also preferably used after preliminarily given a form of masterbatch, for easier dispersion.

The carbon black preferably has an average primary particle size of 10 nm to 30 nm from the viewpoint of dispersibility, which is more preferably 15 nm or larger, or 25 nm or smaller. Good dispersibility can more effectively reduce partial unevenness of welding, during laser welding.

The carbon black preferably has a nitrogen adsorption specific surface area of 30 to 400 m²/g measured in compliance with JIS K6217, from the viewpoint of blackness, which is more preferably 50 m²/g or larger, and particularly 80 m²/g or larger.

From the viewpoint of dispersibility, the carbon black further preferably has a DBP absorption, measured in compliance with JIS K6221, of 20 to 200 cm³/100 g, more preferably 40 cm³/100 g or more and 170 cm³/100 g or less, and even more preferably 50 cm³/100 g or more and 150 cm³/100 g or less. Good dispersibility can reduce partial unevenness of welding during the laser welding.

The resin composition of this embodiment, when intended for use as the light-absorptive resin composition, contains a light-absorptive colorant . More specifically, the light-absorptive resin composition of this embodiment preferably contains 0.01 to 10.00 parts by mass of the light-absorptive colorant , per 100 parts by mass of the thermoplastic resin (preferably polyester-based resin). The lower limit value of the content is preferably 0.1 parts by mass or above, more preferably 0.5 parts by mass or above, even more preferably 1 part by mass or above, and yet more preferably 2 parts by mass or above. At or above the lower limit value, the thermoplastic resin can generate heat and can melt under laser irradiation, making the laser welding more likely to proceed effectively. The upper limit value of the content is preferably 8 parts by mass or below, more preferably 7 parts by mass or below, even more preferably 6 parts by mass or below, yet more preferably 5 parts by mass or below, furthermore preferably 4 parts by mass or below, and furthermore preferably 3 parts by mass or below. At or below the upper limit value, the thermoplastic resin may be effectively prevented from being decomposed due to abrupt or excessive heat generation.

The resin composition of this embodiment may contain only one kind of, or two or more kinds of the light-absorptive colorant . When two or more kinds are contained, the total content preferably falls within the aforementioned ranges.

The light-absorptive resin composition may contain the light-transmissive colorant , but not necessarily. In one embodiment, the content of the light-transmissive colorant in the light-absorptive resin composition, per 100 parts by mass of the thermoplastic resin, is less than 0.001 parts by mass.

### <Inorganic Filler>

The resin composition of this embodiment further preferably contains an inorganic filler. With the inorganic filler, particular with a fibrous inorganic filler, and preferably with a glass fiber contained therein, the resin composition will tend to have enhanced mechanical strength, enhanced strength at high temperature, and the heat resistance, so that the laser-welded article will tend to have improved durability.

The inorganic filler suitably contained in the resin composition of this embodiment is a substance which can demonstrate, when blended with a resin, an effect of enhancing mechanical properties of the obtainable resin composition, to which any of common inorganic fillers for plastics is applicable. Fibrous inorganic filler such as glass fiber, carbon fiber, basalt fiber, wollastonite, or potassium titanate fiber is preferably used. Also granular or shapeless filler such as calcium carbonate, titanium oxide, feldspar-based mineral, clay, organized clay, and glass bead; plate like filler such as talc; flaky inorganic filler such as glass flake, mica, and graphite may be used. Among them, fibrous filler, and particularly glass fiber is preferred, from the viewpoint of mechanical strength, rigidity and heat resistance. The glass fiber used herein may have either circular cross section or modified cross section.

The inorganic filler used herein is more preferably surface-treated with a surface treatment agent such as coupling agent. The glass fiber having the surface treatment agent adhered thereon is preferred for its excellent durability, moist heat resistance, hydrolysis resistance, and heat shock resistance.

The surface treatment agent used herein may be any of known agents, wherein preferred agents are specifically exemplified by silane coupling agent of aminosilane-base, epoxy silane-base, allylsilane-base, and vinyl silane-base. Among them, preferred is the aminosilane-based surface treatment agent, which is specifically exemplified by γ-aminopropyl triethoxysilane, γ-aminopropyl trimethoxysilane and γ-(2-aminoethyl)aminopropyl trimethoxysilane.

Also other preferred surface treatment agent is exemplified by novolac-type epoxy resin-based surface treatment agent, and bisphenol A-type epoxy resin-based surface treatment agent. In particular, treatment with the novolac-type epoxy resin-based surface treatment agent is preferred.

Each of the silane-based surface treatment agent and the epoxy resin-based surface treatment agent may be used singly, in combination of two or more kinds thereof, or both of them may be preferably used in combination. The glass fiber in this embodiment means a fibrous glass material, and more specifically has a chopped form obtained by sizing 1,000 to 10,000 glass fibers to form a strand, and then by cutting the strand into a predetermined length.

The glass fiber in this embodiment preferably has a number-average fiber length of 0.5 to 10 mm, which is more preferably 1 to 5 mm. With use of the glass fiber having the number-average fiber length thus adjusted, the mechanical strength may further be enhanced. The number-average fiber length is determined on an image observed under an optical microscope, by randomly extracting the glass fibers whose fiber length will be determined, then measuring the length of the long sides, and by averaging the measured values. The observation is made at 20× magnification, targeted at 1000 or more fibers. The number average fiber length is approximately equivalent to the cut length.

The reinforcing fiber may have any cross-sectional shape selected from circle, oval, oblong circle, rectangle, rectangle combined with semicircles on both short sides, cocoon and so forth. Circle is preferred. The circle herein not only means geometrical circle, but also conceptually include any shape usually understood to be circle in the technical field to which this embodiment belongs.

The lower limit of the number average fiber diameter of the glass fiber is preferably 4.0 µm or above, more preferably 4.5 µm or above, and even more preferably 5.0 µm or above. The upper limit of the number average fiber diameter of the glass fiber is preferably 15.0 µm or below, and more preferably 14.0 µm or below. With use of the glass fiber having the number average fiber diameter controlled within these ranges, the obtainable formed article will tend to further excel in the mechanical strength. Note that the number average fiber diameter of the glass fiber can be determined on an image observed under an electron microscope, by randomly selecting the glass fibers whose diameter will be determined, then by measuring the diameter at the near center of the fiber, and by averaging the measured values. The observation is made at 1,000× magnification, targeted at 1,000 or more fibers. The number average fiber diameter of glass fiber having a cross-sectional shape other than circle is determined after converting the cross section into a circle having the same area.

The glass fiber used herein may be any fiber melt-spun from commonly marketed glasses such as E-glass (electrical glass), C-glass (chemical glass), A-glass (alkali glass), S-glass (high strength glass), D-glass, R-glass, and alkali resistant glass, which are not specifically limited so long as they can be spun into glass fiber. In this embodiment, E-glass is preferably contained.

The glass fiber used in this embodiment is preferably surface-treated with a surface treatment agent which is typically a silane coupling agent such as γ-metacryloxypropyl trimethoxysilane, γ-glycidoxypropyl trimethoxysilane, or γ-aminopropyl triethoxysilane. Amount of adhesion of the surface treatment agent is preferably 0.01 to 1% by mass of the glass fiber. Other glass fibers usable here include those optionally surface-treated with lubricant such as aliphatic amide compound or silicone oil, antistatic agent such as quaternary ammonium salt, film-forming resin such as epoxy resin or urethane resin, and mixture of film-forming resin with heat stabilizer, flame retardant and so forth.

The glass fiber is commercially available, and exemplified by T-286H, T-756H, T-127 and T-289H from Nippon Electric Glass Co., Ltd.; DEFT2A from Owens Corning; HP3540 from PPG Industries, Inc.; and CSG3PA820 from Nitto Boseki Co., Ltd.

As described previously, the resin composition of this embodiment preferably contains 5 to 100 parts by mass of the inorganic filler (preferably glass fiber), per 100 parts by mass of the thermoplastic resin. The lower limit value of the content of the inorganic filler, per 100 parts by mass of the thermoplastic resin, is preferably 10 parts by mass or above, more preferably 15 parts by mass or above, even more preferably 20 parts by mass or above, yet more preferably 25 parts by mass or above, and furthermore preferably 28 parts by mass or above. At or above the lower limit value, the laser-welded article will tend to have enhanced strength of the base material and enhanced heat resistance. The upper limit value of the content of the inorganic filler, per 100 parts by mass of the thermoplastic resin, is preferably 70 parts by mass or below, more preferably 60 parts by mass or below, and even more preferably 50 parts by mass or below. At or below the upper limit value, weld strength at the interface will tend to increase.

Content of the inorganic filler (preferably glass fiber) in the resin composition of this embodiment is preferably 20% by mass or more of the resin composition, and is more preferably 25% by mass or more. Meanwhile, the content of the inorganic filler (preferably glass fiber) is preferably 40% by mass or less, and more preferably 38% by mass or less.

The resin composition of this embodiment may contain only one kind of, or two or more kinds of the inorganic filler (preferably glass fiber). When two or more kinds are contained, the total content preferably falls within the aforementioned ranges.

### <Other Components>

The resin composition of this embodiment may contain some other optional components besides those described previously, without seriously undermining the desired physical properties. Such other components are exemplified by various resin additives. Only one of such other components may be contained, or two or more kinds are contained according to freely selectable combination and proportion.

Other components are more specifically exemplified by flame retardant, stabilizer, mold releasing agent, UV absorber, antistatic agent, anti-clouding agent, anti-blocking agent, flow modifier, plasticizer, dispersion aid, and antibacterial agent. The resin composition of this embodiment preferably contains at least one of stabilizer or mold releasing agent.

### <<Flame Retardant>>

The resin composition of this embodiment may contain a flame retardant. With the flame retardant contained therein, the flame retardance will tend to further improve.

The flame retardant is exemplified by organohalogen compound, antimony compound, phosphorus compound, nitrogen compound, and other organic or inorganic compounds. The organohalogen compound is specifically exemplified by brominated polycarbonate, brominated epoxy resin, brominated phenoxy resin, brominated polyphenylene ether resin, brominated polystyrene resin, brominated bisphenol A, and pentabromobenzyl polyacrylate.

The antimony compound is exemplified by antimony trioxide, antimony pentoxide, and sodium antimonate. The flame retardant based on phosphorus-containing compound is exemplified by phosphate ester, polyphosphoric acid, melamine polyphosphate, ammonium polyphosphate, metal phosphinate, and red phosphorus. The nitrogen-containing flame retardant is exemplified by melamine cyanurate and phosphazene. The organic flame retardant and the inorganic flame retardant other than those described above are exemplified by inorganic compound such as aluminum hydroxide, magnesium hydroxide, silicon compound, and boron compound.

Content of the flame retardant, when contained, is usually 0.001 parts by mass or more per 100 parts by mass of the thermoplastic resin, and preferably 0.01 parts by mass or more, meanwhile, usually 20 parts by mass or less, and preferably 10 parts by mass or less. With the content of the flame retardant controlled at or above the lower limit value of the aforementioned ranges, the flame retardant can more effectively demonstrate its effect. Meanwhile, with the content of the flame retardant controlled to the upper limit value of the aforementioned range or below, the effect will be demonstrated economically without saturating.

The resin composition of this embodiment may contain only one kind of the flame retardant, or two or more kinds thereof. When two or more kinds are contained, the total content preferably falls within the aforementioned ranges.

### <<Stabilizer>>

The resin composition of this embodiment preferably contains a stabilizer. The stabilizer is preferably phosphorus-containing stabilizer or phenolic stabilizer.

The phosphorus-containing stabilizer usable herein may be any of known ones, which are exemplified by oxo acid of phosphorus such as phosphoric acid, phosphonic acid, phosphorous acid, phosphinic acid, and polyphosphoric acid; metal acid pyrophosphate such as sodium acid pyrophosphate, potassium acid pyrophosphate, and calcium acid pyrophosphate; phosphate salt of Group 1 or Group 2B metals such as potassium phosphate, sodium phosphate, cesium phosphate, and zinc phosphate; organophosphate compound, organophosphite compound, and organophosphonite compound. Organophosphite compound is particularly preferred.

The phenolic stabilizer is exemplified by hindered phenolic antioxidant.

Details of these compounds may be understood referring to the description in paragraphs [0105] to [0111] of WO 2020/013127.

Content of the stabilizer is usually 0.001 parts by mass or more per 100 parts by mass of the thermoplastic resin, and preferably 0.01 parts by mass or more, meanwhile usually 1 part by mass or less, and preferably 0.5 parts by mass or less. With the content of the stabilizer adjusted at or above the lower limit value of these ranges, the effect of the stabilizer will be more effectively obtainable. Meanwhile, with the content of the stabilizer adjusted at or below the upper limit value of these ranges, the effect will be demonstrated economically without saturating.

The resin composition of this embodiment may contain only one kind of, or two or more kinds of the stabilizer. When two or more kinds are contained, the total content preferably falls within the aforementioned ranges.

### <<Mold Releasing Agent>>

The resin composition of this embodiment preferably contains a mold releasing agent (lubricant). The mold releasing agent is exemplified by aliphatic carboxylic acid, ester formed between aliphatic carboxylic acid and alcohol, aliphatic hydrocarbon compound having a number-average molecular weight of 200 to 15000, wax, and polysiloxane-based silicone oil.

Details of these compounds may be understood referring to paragraphs [0112] to [0121] of WO 2020/013127.

Content of the mold releasing agent is usually 0.001 parts by mass or more, per 100 parts by mass of the thermoplastic resin, and preferably 0.01 parts by mass or more, meanwhile, usually 2 parts by mass or less, and preferably 1 part by mass or less. With the content of the mold releasing agent adjusted to the lower limit value or above of the aforementioned range, a mold releasing effect will be obtainable more easily. With the content of the mold releasing agent adjusted to the upper limit value or below of the aforementioned range, a sufficient level of hydrolysis resistance will be obtainable, and die pollution during injection molding will be less likely to occur.

<Physical Properties of Resin Composition>

The resin composition of this embodiment, when intended for use as the transmissive resin composition, preferably excels in transmittance. More specifically, the transmissive resin composition of this embodiment more preferably demonstrates a transmittance (at 1064 nm wavelength) of larger than 15.0%, when measured on the counter gate side with use of a visible-UV spectrophotometer (equipped with an integrating sphere) from Shimadzu Corporation, which is more preferably 20.0% or larger. The upper limit value, although not specifically limited, is practically 90% or below.

The resin composition of this embodiment, intended for use as the transmissive resin composition, preferably excels in retention of tensile strength even after hot-humid treatment (PCT (121°C × 2 atm × 100%RH) treatment) for 100 hours (1 atm = 101.325 kPa). More specifically, the transmissive resin composition of this embodiment preferably retains 50% or more of the tensile strength, even when measured after PCT 100 treatment in compliance with ISO 527-1 and 527-2, which is more preferably 55% or more, and even more preferably 63% or more. The upper limit value, although not specifically limited, is practically 95% or below, for example.

The resin composition of this embodiment, intended for use as the transmissive resin composition, preferably demonstrates a Charpy notched impact strength of 7 kJ/m² or larger, which is more preferably 8 kJ/m² or larger, and even more preferably 9 kJ/m² or larger. The upper limit value, although not specifically limited, is practically 20 kJ/m² or below.

The resin composition of this embodiment, intended for use as the light-absorptive resin composition, preferably excels in retention of tensile strength even after hot-humid treatment. More specifically, the light-absorptive resin composition of this embodiment preferably retains 50% or more of the tensile strength, even when measured after PCT 100 treatment in compliance with ISO 527-1 and 527-2, which is more preferably 55% or more, and even more preferably 63% or more. The upper limit value, although not specifically limited, is practically 95% or below, for example.

The resin composition of this embodiment, intended for use as the transmissive resin composition, preferably demonstrates a Charpy notched impact strength of 7 kJ/m² or larger, which is more preferably 8 kJ/m² or larger, and even more preferably 9 kJ/m² or larger. The upper limit value, although not specifically limited, is practically 20 kJ/m² or below.

The resin composition of this embodiment is applicable also to a formed article whose light transmittance varies locally. For example, the resin composition of this embodiment, injection-molded into a 60 mm×60 mm×1.5 mm specimen, may demonstrate a difference between transmittance values of 1064 nm wavelength light, measured at positions 15 mm and 45 mm away from a gate, of 2.1% or larger, which may even be 2.2% or larger. The upper limit of the difference of the light transmittance is typically 3.5% or smaller, and practically 3.0% or smaller.

Details of methods for measuring the transmittance, retention of tensile strength after PCT treatment for 100 hours, Charpy notched impact strength, and difference of light transmittance will follow the description later in EXAMPLES.

### <Method for Preparing Resin Composition>

The resin composition of this embodiment may be prepared by any of ordinary methods for preparing resin composition. Commonly, the individual components and various optional additives are combined and thoroughly mixed, and then melt-kneaded with use of a single-screw or twin-screw extruder. Alternatively, the individual components may be fed through a feeder into an extruder, without preliminarily mixing them, or after preliminarily mixing only a part of them, and melt-kneaded to prepare the resin composition of this embodiment. Still alternatively, a part of the components, such as dye, is melt-kneaded with a thermoplastic resin to prepare a masterbatch, to which the residual components may be blended and melt-kneaded.

Note that the inorganic filler such as glass fiber, when used, is preferably side-fed through a side feeder arranged in the middle of a cylinder of the extruder.

Heating temperature in the melt kneading is selectable usually in the range from 220 to 300°C. Too high temperature will tend to make the resin composition more likely to emit decomposition gas, and would cause clouding. Hence, a screw arrangement is preferably selected taking shear heating, for example, into consideration. An antioxidant or heat stabilizer is preferably used in order to suppress decomposition during kneading or post processes.

### <Method for Manufacturing Formed Article>

Method for manufacturing the formed article of this embodiment is not specifically limited, and may be freely selectable from known forming methods usually employed for resin compositions. The method is exemplified by injection molding, ultra-high-speed injection molding, injection compression molding, two color molding, hollow molding such as gas-assisted molding, molding with use of heat insulation dies, molding with use of rapid heating dies, foam molding (including supercritical fluid), insert molding, IMC (in-mold coating) molding, extrusion molding, sheet forming, thermoforming, rotational molding, laminate molding, press molding and blow molding. Among them, injection molding is preferred.

Detail of the injection molding may be understood referring to the description in paragraphs [0113] to [0116] of JP 6183822 B.

### <Kit>

A kit for Galvano-scanning laser welding of this embodiment is a kit having a transmissive resin composition and a light-absorptive resin composition, wherein at least either the transmissive resin composition or the light-absorptive resin composition is the resin composition of this embodiment. Use of the resin composition of this embodiment, for at least one of the transmissive resin composition or the light-absorptive resin composition, enables proper laser welding under broad conditions for laser irradiation. In the kit for Galvano-scanning laser welding of this embodiment, both of the transmissive resin composition and the light-absorptive resin composition are preferably the resin composition of this embodiment. More specifically, the kit for Galvano-scanning laser welding of this embodiment preferably has a resin composition for Galvano-scanning laser welding (light-transmissive resin composition) that contains 0.1 to 20 parts by mass of a reactive compound per 100 parts by mass of the thermoplastic resin, and, a resin composition for Galvano-scanning laser welding (light-absorptive resin composition) that contains 0.1 to 20 parts by mass of a reactive compound per 100 parts by mass of the thermoplastic resin, and a light-absorptive colorant .

The thus arranged kit will excel in laser weldability, and is preferably used as a kit for manufacturing a formed article by laser welding.

That is, in the kit of this embodiment, the formed article formed of the transmissive resin composition will serve as the laser-transmissive resin member during laser welding, meanwhile, the formed article formed of the light-absorptive resin composition will serve as the laser-absorptive resin member during laser welding.

The resin composition of this embodiment is used for Galvano-scanning laser welding. Galvano-scanning laser welding is also referred to as quasi-simultaneous welding that relies upon a system with use of built-in Galvano mirrors for scanning the laser light. Use of Galvano-scanning laser welding enables laser welding under broad conditions, and simplifies laser welding of member with irregularity of shape or thickness.

In the kit, the component of the transmissive resin composition of this embodiment excluding the light-transmissive colorant and the inorganic filler, and, the component of the light-absorptive resin composition excluding the light-absorptive colorant and the inorganic filler, are preferably commonalized up to a degree of 80% by mass or more, which is more preferably 90% by mass or more, and even more preferably 95 to 100% by mass.

The kit can attain a laser weld strength of 1000 N or larger, which may further be 1500 N or larger, 1800 N or larger, or 2000 N or larger. The upper limit value of the laser weld strength, although not specifically limited, is practically 3000 N or below. The laser weld strength may be measured according to the description later in EXAMPLES.

The kit is preferably capable of attaining high laser weld strength under broad conditions for laser irradiation. In particular, the kit is preferably capable of attaining such laser weld strength (particularly 2000 N or larger), over the entire range of irradiation energy from 2.0 to 6.0 J/mm.

### <<Method for Manufacturing Formed Article>>

A method for manufacturing a formed article of this embodiment includes welding a transmissive resin member and an absorptive resin member by Galvano-scanning laser welding, wherein at least either the transmissive resin member or the absorptive resin member is formed of the resin composition of this embodiment. Preferably, both of the transmissive resin member and the absorptive resin member are formed of the resin composition of this embodiment.

More specifically, in the method for manufacturing a formed article of this embodiment, the transmissive resin member is preferably formed of a resin composition for Galvano-scanning laser welding (transmissive resin composition) that contains 0.1 to 20 parts by mass of the reactive compound per 100 parts by mass of the thermoplastic resin, meanwhile, the absorptive resin member is preferably formed of a resin composition for Galvano-scanning laser welding (absorptive resin composition) that contains 0.1 to 20 parts by mass of the reactive compound per 100 parts by mass of the thermoplastic resin, and further contains a light-absorptive colorant . The transmissive resin composition preferably contains a light-transmissive colorant .

Next, the laser welding method will be explained. In this embodiment, the transmissive resin member and the absorptive resin member are welded by Galvano-scanning laser welding to manufacture the formed article. Laser welding can tightly weld the transmissive resin member and the absorptive resin member, without using an adhesive. Moreover, Galvano-scanning laser welding enables laser welding under broad conditions for laser irradiation. Laser welding can make effect even if the formed article had a gap between the weld members due to sink or warpage during forming, and even if the gap measured 0.1 mm or larger, even 0.2 mm or larger, even 0.5 mm or larger and even particularly 0.8 mm or larger.

In the laser welding conditions in this embodiment, the output is preferably 80 W or larger, more preferably 100 W or larger, and even more preferably 120 W or larger. This embodiment, relying upon Galvano-scanning laser welding, enables uniform laser irradiation, even under high output. The electric power is preferably 300 W or smaller, and more preferably 250 W or smaller, from the viewpoint of productivity.

The laser scanning speed is preferably rapid, which is preferably 200 mm/s or faster, more preferably 300 mm/s or faster, yet more preferably 400 mm/s or faster, furthermore preferably 500 mm/s or faster, furthermore preferably 600 mm/s or faster, furthermore preferably 700 mm/s or faster, and particularly preferably 800 mm/s or faster. At or above the lower limit value, the members may be evenly laser-irradiated. The upper limit value of the laser scanning speed is typically 3000 mm/s or below, which is practical from the viewpoint of productivity.

In the laser welding of this embodiment, the irradiated may take place while orbiting the laser light. The number of laps is typically 3 laps or larger, preferably 5 laps or larger, preferably 7 laps or larger, and more preferably 9 laps or larger. At or above the lower limit value, the welding will be successful without causing uneven welding. The upper limit of the number of laps is typically 100 laps or below from the viewpoint of productivity, and may be 70 laps or below.

Shape of the members, although not specifically limited, usually has at least a surface-contact part (flat or curved), since the members are used in a joined form as a result of laser welding. In the laser welding, the laser light transmitted through the transmissive resin member is absorbed by the absorptive resin member, causing melting and welding of both members.

Laser light source used for laser welding may be determined depending on light absorption wavelength of the light-absorptive colorant , for which laser in a wavelength range of 800 to 1100 nm is preferred. More specifically, preferred are YAG (yttrium aluminum garnet crystal) laser (1064 nm wavelength), and LD (laser diode) (808 nm, 820 nm, 840 nm, 880 nm, or 940 nm wavelength).

The laser preferably has a focal diameter of 0.1 mm or larger, preferably 0.2 mm or larger, and even more preferably 0.5 mm or larger. At or above the upper limit value, weld strength of the laser- weld portion may be enhanced. Meanwhile, the laser irradiation diameter is preferably 30 mm or smaller, more preferably 10 mm or smaller, and even more preferably 3.0 mm or smaller. At or below the lower limit value, the weld width is controllable.

The focal diameter of laser is selectable depending on the width or height of the welding face.

The laser light may be focused on, or defocused from the joined face, which is suitably selectable depending on a desired welded article.

More specifically, in an exemplary case where the transmissive resin member and the absorptive resin member are welded by laser welding, first, the welding sites of both members are brought into contact. The welding sites herein are preferably kept in surface contact between flat faces, curved faces, or combination of flat and curved faces.

In order to keep the members in contact, pressure may be applied from the transmissive member side, while placing thereon, that is on the side of laser irradiation, a transparent member such as glass plate, quartz plate, or acrylic plate. In particular, use of the glass plate or quartz plate is suitable for promoting heat radiation during the laser welding, and to obtain good outer appearance. Pressurizing may alternatively be effected with use of a metal plate that surrounds the periphery of a site to be welded of the transmissive member.

Next, the laser light is irradiated through the transmissive resin member. The laser light herein may be optionally condensed through a lens, on the interface between both members. The condensed beam transmits through the transmissive resin member, absorbed at around the surface of the absorptive resin member, generates heat, and melts the resin. The heat is then conducted by thermal conduction also to the transmissive resin member to melt it, to form a molten pool at the interface between both members. Both members are welded after cooled.

The formed article, composed of the transmissive resin member and the absorptive resin member thus welded, has high weld strength. Note that the formed article in the context of this embodiment encompasses not only finished product or parts, but also members that compose a part of them.

The formed article obtained by laser welding in this embodiment excels in mechanical strength and weld strength, and causes less damage on the resin even after laser irradiation, and is therefore applicable to various purposes, such as a variety of storage containers, electrical/electronic equipment parts, office automation (OA) equipment parts, home electric appliance parts, machine and mechanism parts, and vehicle mechanism parts. In particular, the formed article is suitable for food container, drug container, oil and fat products container, vehicle hollow part (various tanks, intake manifold part, camera body, etc.), vehicle electrical part (various control units, ignition coil part, etc.), car-borne electronic component and sensor component (case of millimeter-wave radar, LiDAR, ECU case, or sonar senser, etc.), electronically controlled throttle body, motor part, various sensor parts, connector part, switch part, circuit breaker part, relay part, coil part, transformer part, lamp part, and so forth. The resin composition and the kit of this embodiment are particularly suitable for UV exposed article.

Note that UV exposed article in this embodiment means a formed article on which UV light is directly irradiated, a formed article on which reflected UV light is irradiated, and, a formed article on which UV light is indirectly irradiated such as through a transparent formed article. This embodiment is particularly suitable for the formed article on which UV light is directly irradiated, and a formed article on which reflected UV light is irradiated. The formed article herein encompasses component, case and other formed article. More specifically, the UV exposed article includes car-borne camera component for in-vehicle and/or outside-vehicle installation, car-borne camera module that contains the car-borne camera component, case of millimeter-wave radar for in-vehicle and/or outside-vehicle installation, millimeter-wave radar module that contains the millimeter-wave radar, component in vehicle headlight, case of electric parking brake (EPB), and case of sensor case of sonar sensor and so forth. Particularly preferred are car-borne camera component, case of millimeter-wave radar for in-vehicle and/or outside-vehicle installation, case of electric parking brake, and case of sensor case.

### EXAMPLES

This invention will further be detailed referring to Examples. All materials, amounts of consumption, proportions, process details and procedures described in Examples below may suitably be modified. Hence, the scope of this invention is by no means limited to specific Examples below.

In a case where any measuring instrument used in EXAMPLES become unavailable typically due to discontinuation, the measurement may be conducted with use of other instrument having equivalent performances.

### 1. Raw Materials

Raw materials summarized in Table 1 and Table 2 below were used.

**[Table 1]**

| Component | Abbr. | |
|---|---|---|
| Polybutylene terephthalate resin | PBT | Polybutylene terephthalate resin |
| | | Product name: Novaduran (registered trademark) 5008, from Mitsubishi Engineering-Plastics Corporation |
| | | Intrinsic viscosity: 0.85 dL/g |
| | | Terminal carboxy group content : 20 eq/ton |
| Polycarbonate resin | PC | Produt name: Iupilon (registered trademark) H4000, from Mitsubishi Engineering-Plastics Corporation |
| | | Viscosity-average molecular weight: 16,000 |
| Epoxy compound | EP1 | Ortho cresol novolac-type epoxy resin |
| | | Polyglycidyl ether compound of o -cresol formaldehyde polycondensate |
| | | Product name: YDCN704, from Nippon Steel & Sumikin Materials Co., Ltd. |
| | | Epoxy equivalent: 207 (g/eq) |
| | EP2 | Bisphenol A-type epoxy resin (liquid) |
| | | Product name: EP-17, from ADEKA Corporation |
| | | Epoxy equivalent : 185 (g/eq) |
| | EL1 | Unmodified ethylene-acrylic copolymer: ethylene-butyl acrylate copolymer |
| | | Product name: Lotryl (registered trademark) 35BA40, from Arkema S.A. |
| | | MFR: 40 g/10 min (190°C, 2.16 kgf)) |
| | EL2 | Epoxy compound |
| | | Ethylene/butyl acrylate/glycidyl methacrylate copolymer |
| | | Product name: Lotader (registered trademark) AX8700, from Arkema S.A. |
| | | MFR: 9 g/10 min (190°C, 2.16 kgf)) |
| | EL3 | Core-shell elastomer having silicone-acrylate copolymer as major component |
| | | Product name: Metablen S-2001, from Mitsubishi Chemical Corporation |
| Elastomer | EL4 | Epoxy compound |
| | | Glydicyl methacrylate-modified core-shell elastomer having silicone-acrylate copolymer as major component |
| | | Product name: Metablen S-2200, from Mitsubishi Chemical Corporation |
| | EL5 | Epoxy compound |
| | | Ethylene/butyl acrylate/glycidyl methacrylate copolymer |
| | | Product name: Lotader (registered trademark) AX8900, from Arkema S.A. |
| | | MFR: 6 g/10 min (190°C, 2.16 kgf)) |
| | EL6 | Epoxy compound, Bondfast 2C BF-2C, from Sumitomo Chemical Co., Ltd. |
| | | MFR: 3 g/10 min (190°C, 2.16 kfg)) |
| | EL7 | Epoxy compound, Elvaloy AS, from Dow-Mitsui Polychemicals |
| | | MFR: 12 g/10 min (190°C, 2.16 kgf)) |

**[Table 2]**

| Component | Abbr. | |
|---|---|---|
| Glass fiber | GF1 | Product name: T-127, from Nippon Electric Glass Co., Ltd. |
| | | Number-average fiber diameter: 13 µm, number-average fiber length: 3 mm |
| Phenolic stabilizer | | Pentaerythritoltetrakis[3-(3,5-di-*tert* -butyl-4-hydroxyphenyl)propionate] |
| | | From ADEKA Corporation, product name: ADK STAB AO-60 |
| Phosphorus-containing stabilizer | | Mixture of compounds with n=1,2 in O=P(OH)ₙ(OC₁₃H₃₇)₃₋ₙ |
| | | Product name: ADK STAB AX-71, from ADEKA Corporation |
| Mold releasing agent | | Oxydized polyethylene wax |
| | | Product name: Licowax PED 522, from Clariant AG |
| Absorptive colorant (carbon black masterbatch) | | Carbon black masterbatch |
| | | Carbon black/PBT = 19/81 (mass ratio) |
| | | Carbon black: product name: #650B, from Mitsubishi Chemical Corporation, average primary particle size = 22 nm, coloring power = 125% |
| | | Polybutylene terephthalate: Novaduran (registered trademark) 5008, from Mitsubishi Engineering-Plastics Corporation |
| Transmissive Colorant | DY1 | Perinone-based dye (C.I. Solvent Red 179) |
| | | Product name: Plast Red 8370, from Arimoto Chemical Co., Ltd. |
| | DY2 | Anthraquinone-based dye (C.I. Solvent Blue 97) |
| | | Product name: KP Plast Blue R, from Kiwa Chemical Industry Co., Ltd. |
| | DY3 | Anthraquinone-based dye (C.I. Solvent yellow 163) |
| | | Product name: KP Plast Yellow HK, from Kiwa Chemical Industry Co., Ltd. |

The masterbatch of carbon black was prepared according to the method below. That is, polybutylene terephthalate resin and carbon black, with a mass proportion of 81:19, were placed in a stainless steel tumbler, and mixed under stirring for one hour. The obtained mixture was placed in a main hopper of a 30 mm vented twin-screw extruder (TEX30α, from the Japan Steel Works, Ltd.), kneaded at a preset temperature of extruder barrel of 260°C, a die temperature of 250°C, a screw rotation speed of 200 rpm, and an ejection volume of 40 kg/hours, and extruded into strands, to obtain a masterbatch of the carbon black.

### <Measurement of Epoxy Equivalent>

Epoxy equivalent was measured in compliance with JIS K7236, and denoted in eq/g.

### <Preparation of Colorant >

Colorant used herein was prepared by weighing the individual dyes, and stirring for 5 hours.

### Example A: Preparation of Laser-Transmissive Resin Composition

### (Examples A-1 to A-3, Comparative Examples A-1 to A-3; Example A-1 is a reference example)

Components other than the glass fiber, summarized in Table 3, were placed in a stainless steel tumbler, and mixed under stirring for one hour. The individual components in Table 3 are denoted in parts by mass. The obtained mixture was placed in a main hopper of a 30 mm vented twin-screw extruder (TEX30α, from the Japan Steel Works, Ltd.), the glass fiber (GF) was fed through the seventh side feeder from the hopper, the content was kneaded at a preset temperature of extruder barrels C1 to C15 of 260°C, a die temperature of 250°C, a screw rotation speed of 200 rpm, and an ejection volume of 40 kg/hours, and extruded into strands, to obtain a pellet of the resin composition.

### <Molding of Transmissive Resin Member>

The thus obtained resin composition pellet was dried at 120°C for 7 hours, and then injection-molded with use of an injection molding machine (#NEX80-9E#, from Nissei Plastic Industrial Co., Ltd.) at a cylinder temperature of 260°C, a die temperature of 60°C, and under the conditions below, to manufacture a 60 mm×60 mm×1.5 mm thick flat test specimen for measurement of transmittance.

### (Injection Conditions)

Packing time: 10 sec
Cooling time: 10 sec
Injection speed: 90 mm/sec
Back pressure: 5 MPa
Screw speed: 100 rpm

### <Measurement of Counter Gate Side Transmittance>

Transmittance (%) at 1064 nm wavelength of the thus obtained test specimen (60 mm×60 mm×1.5 mm thick) was measured at a point 45 mm away from the gate side portion, and at the center of the width of the test specimen, with use of a UV-visible-near infrared spectrophotometer ("UV-3100PC" equipped with an integrating sphere, from Shimadzu Corporation).

### <Measurement of Gate Side Transmittance>

Transmittance (%) at 1064 nm wavelength of the thus obtained test specimen was measured at a point 15 mm away from the gate side portion, and at the center of the width of the test specimen, with use of a UV-visible-near infrared spectrophotometer ("UV-3100PC" equipped with an integrating sphere, from Shimadzu Corporation).

### <Manufacture of ISO Multi-Purpose Test Specimen, and Test Specimen for Measurement of Charpy Notched Impact Strength>

The thus obtained pellet of the resin composition was dried at 120°C for 7 hours, and then injection-molded with use of an injection molding machine ("J-85AD-60H", from the Japan Steel Works, Ltd.) in compliance with JIS 7139 and JIS 7152, to manufacture a 4.0 mm thick ISO multi-purpose test specimen.

From this test specimen, a test specimen for measurement of Charpy notched test specimen was formed in compliance with JIS179-1 and 179-2 standards.

The thus obtained test specimen was subjected to measurement of counter gate side transmittance, retention of tensile strength after PCT treatment, and Charpy notched impact strength.

### <Retention of Tensile Strength after PCT Treatment>

The thus obtained ISO multi-purpose test specimen (4.0 mm thick) was subjected to measurement of initial tensile strength (MPa) in compliance with JIS 7161. The ISO multi-purpose test specimen (4.0 mm thick) was treated in a pressure cooker tester (EH8-221M, from ESPEC Corporation) at a temperature of 121°C, 100% relative humidity, and a pressure of 2 atm for 100 hours, moisture-conditioned in a 23°C×50% environment, and similarly subjected to measurement of tensile strength (after 100-hour treatment) in MPa. The retention of tensile strength was then calculated (in %). Retention of tensile strength (%) = [(Tensile strength after 100- hour PCT treatment)/(Initial tensile strength)] × 100

### <Charpy Notched Impact Strength>

Each of the thus formed ISO multi-purpose test specimen (4.0 mm thick) was subjected to measurement of Charpy notched impact strength in compliance with ISO 179-1 and 179-2.

The unit was given in kJ/m².

**[Table 3]**

| | | | Example A-1 | Comparative Example A-1 | Example A-2 |
|---|---|---|---|---|---|
| | Polyester resin | PBT | 100 | 100 | 80 |
| | Polycarbonate resin | PC | | | 20 |
| | Epoxy compound | EP1 | 1.47 | | |
| | | EP2 | | | |
| | Epoxy compound (elastomer) | EL2 | | | 9.45 |
| | | EL4 | | | |
| | Elastomer | EL1 | | | |
| Chemical composition of resin composition for transmissive member | | EL3 | | | |
| | Glass fiber | GF1 | 44.0 | 44.0 | 47.24 |
| | Phenolic stabilizer | | 0.29 | 0.29 | 0.21 |
| | Phosphorus-containing stabilizer | | | | 0.11 |
| | Mold releasing agent | | 0.44 | 0.44 | 0.32 |
| | Carbon black masterbatch | | | | |
| | Colorant | DY1 | 0.13 | 0.13 | |
| | | DY2 | 0.15 | 0.15 | |
| | | DY3 | 0.12 | 0.12 | |
| Physical properties of transmissive resin member | 60 mm×60 mm×1.5 mmt | % | 29.0 | 28.5 | 29.1 |
| | Counter gate side transmissivity | | | | |
| | 60 mm×60 mm×1.5 mmt | % | 26.4 | 26.5 | 26.3 |
| | Gate side transmissivity | | | | |
| | 60 mm×60 mm×1.5 mmt | % | 2.6 | 2.0 | 2.8 |
| | Difference of transmissivity counter gate side - gate side | | | | |
| | Retention of tensile strength after PCT (120°C ×2 atm×100%RH, 100 h) treatment | % | 88.7 | 44.4 | 72.9 |
| | Charpy notched impact strength | kJ/m² | 9.6 | 9.4 | 12.5 |

| | | | Comparative Example A-2 | Example A-3 | Comparative Example A-3 |
|---|---|---|---|---|---|
| | Polyester resin | PBT | 80 | 100 | 100 |
| | Polycarbonate resin | PC | 20 | | |
| | Epoxy compound | EP1 | | | |
| | | EP2 | | | |
| | Epoxy compound (elastomer) | EL2 | | | |
| | | EL4 | | 9.45 | |
| Chemical composition of resin composition for transmissive member | Elastomer | EL1 | | | |
| | | EL3 | 9.45 | | 9.45 |
| | Glass fiber | GF1 | 47.24 | 47.24 | 47.24 |
| | Phenolic stabilizer | | 0.21 | 0.31 | 0.31 |
| | Phosphorus-containing stabilizer | | 0.11 | | |
| | Mold releasing agent | | 0.32 | 0.47 | 0.47 |
| | Carbon black masterbatch | | | | |
| | Colorant | DY1 | | | |
| | | DY2 | | | |
| | | DY3 | | | |
| Physical properties of transmissive resin member | 60 mm×60 mm×1.5 mmt | % | 28.9 | 17.3 | 18.7 |
| | Counter gate side transmissivity | | | | |
| | 60 mm×60 mm×1.5 mmt | % | 27.0 | 15.8 | 16.8 |
| | Gate side transmissivity | | | | |
| | 60 mm×60 mm×1.5 mmt | % | 1.9 | 1.5 | 1.9 |
| | Difference of transmissivity counter gate side - gate side | | | | |
| | Retention of tensile strength after PCT (120°C ×2 atm×100%RH, 100 h) treatment | % | 40.8 | 65.3 | 60.8 |
| | Charpy notched impact strength | kJ/m² | 10.6 | 11.7 | 10.3 |

### Example B: Preparation of Laser-Absorptive Resin Composition (Examples B-1 to B-8, Comparative Examples B-1 to B-4; Examples B-1 and B-4 are reference examples)

Components other than the glass fiber, summarized in Table 4 or 5, were placed in a stainless steel tumbler, and mixed under stirring for one hour. The individual components in Table 4 or 5 are denoted in parts by mass. The obtained mixture was placed in a main hopper of a 30 mm vented twin-screw extruder (TEX30α, from the Japan Steel Works, Ltd.), the glass fiber (GF) was fed through the seventh side feeder from the hopper, the content was kneaded at a preset temperature of extruder barrels C1 to C15 of 260°C, a die temperature of 250°C, a screw rotation speed of 200 rpm, and an ejection volume of 40 kg/hours, and extruded into strands, to obtain a pellet of the resin composition. A test specimen was manufactured with use of the thus obtained pellet.

### <Manufacture of ISO Multi-Purpose Test Specimen, and Test Specimen for Measurement of Charpy Notched Impact Strength>

The thus obtained pellet of the resin composition was dried at 120°C for 7 hours, and then injection-molded with use of an injection molding machine ("J-85AD-60H", from the Japan Steel Works, Ltd.) in compliance with JIS 7139 and JIS 7152, to manufacture a ISO multi-purpose test specimen. From this test specimen, a test specimen for measurement of Charpy notched test specimen was also formed in compliance with JIS179-1 and 179-2 standards.

The thus obtained test specimen was subjected to measurement of retention of tensile strength after PCT treatment, and Charpy notched impact strength, in the same way as described previously.

**[Table 4]**

| | | | Example B-1 | Example B-2 | Example B-3 | Comparative Example B-1 | Comparative Example B-2 |
|---|---|---|---|---|---|---|---|
| | Polyester resin | PBT | 100 | 100 | 100 | 100 | 100 |
| | Polycarbonate resin | PC | | | | | |
| | Epoxy compound | EP1 | | | | | |
| | | EP2 | 0.60 | | | | |
| | Epoxy compound (elastomer) | EL2 | | 9.76 | | | |
| | | EL4 | | | 9.76 | | |
| Chemical composition of absorptive resin composition | | EL5 | | | | | |
| | | EL6 | | | | | |
| | | EL7 | | | | | |
| | Elastomer | EL1 | | | | 9.76 | |
| | | EL3 | | | | | 9.76 |
| | Glass fiber | GF1 | 44.7 | 48.8 | 48.8 | 48.8 | 48.78 |
| | Phenolic stabilizer | | 0.30 | 0.33 | 0.33 | 0.33 | 0.33 |
| | Phosphorus-containing stabilizer | | | | | | |
| | Mold releasing agent | | 0.45 | 0.49 | 0.49 | 0.49 | 0.49 |
| | Carbon black masterbatch | | 2.98 | 3.25 | 3.25 | 3.25 | 3.25 |
| Properties of absorptive resin member | Retention of tensile strength after PCT (120°C×2 atm×100%RH, 100 h) treatment | % | 68.5 | 64.8 | 65.3 | 57.4 | 60.8 |
| | Charpy notched impact strength | kJ/m² | 9.7 | 12.8 | 11.7 | 12.6 | 10.3 |

**[Table 5]**

| | | | Example B-4 | Comparative Example B-3 | Example B-5 | Comparative Example B-4 | Example B-6 | Example B-7 | Example B-8 |
|---|---|---|---|---|---|---|---|---|---|
| | Polyester resin | PBT | 100 | 100 | 80 | 80 | 100 | 100 | 100 |
| | Polycarbonate resin | PC | | | 20 | 20 | | | |
| | Epoxy compound | EP1 | 1.50 | | | | | | |
| | | EP2 | | | | | | | |
| | Epoxy compound (elastomer) | EL2 | | | 9.77 | | | | |
| Chemical composition of absorptive resin composition | | EL4 | | | | | | | |
| | | EL5 | | | | | 9.76 | | |
| | | EL6 | | | | | | 9.76 | |
| | | EL7 | | | | | | | 9.76 |
| | Elastomer | EL1 | | | | | | | |
| | | EL3 | | | | 9.77 | | | |
| | Glass fiber | GF1 | 45.1 | 44.4 | 48.9 | 48.9 | 48.8 | 48.8 | 48.8 |
| | Phenolic stabilizer | | 0.30 | 0.30 | 0.33 | 0.33 | 0.33 | 0.33 | 0.33 |
| | Phosphorus-containing stabilizer | | | | 0.16 | 0.16 | | | |
| | Mold releasing agent | | 0.45 | 0.44 | 0.49 | 0.49 | 0.49 | 0.49 | 0.49 |
| | Carbon black masterbatch | | 3.01 | 2.96 | 3.26 | 3.26 | 3.25 | 3.25 | 3.25 |
| Properties of absorptive resin member | Retention of tensile strength after PCT (120°C×2 atm×100%RH, 100 h) treatment | % | 88.7 | 44.4 | 72.9 | 40.8 | 69.2 | 64.6 | 67.1 |
| | Charpy notched impact strength | kJ/m² | 9.5 | 9.6 | 12.5 | 10.6 | 12.7 | 11.5 | 12.4 |

### Example C: Laser Welding

### Examples C-1 to C-13 (Examples C-1 and C-4 are reference examples), Reference Examples C-1 to C-12

### <Molding of Transmissive Resin Member>

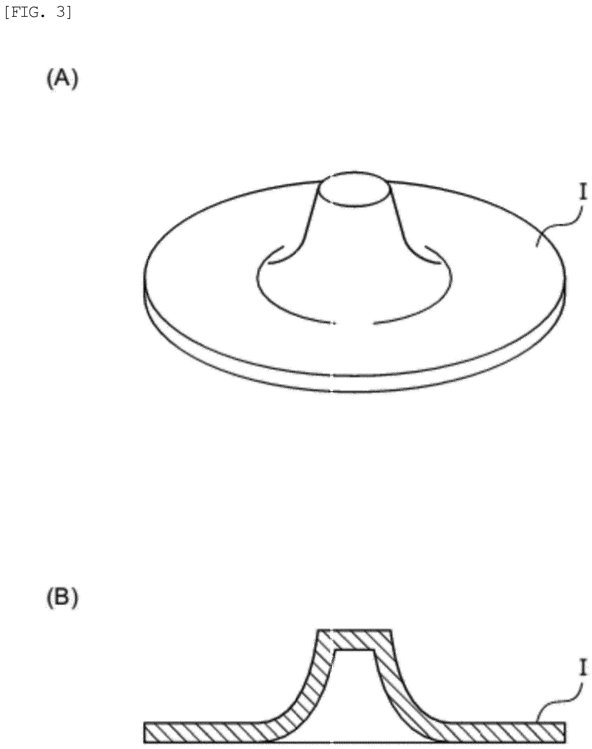

The resin pellet obtained in Example A was dried at 120°C for 7 hours, and then injection-molded with use of an injection molding machine ("J55", from the Japan Steel Works, Ltd.), at a cylinder temperature of 260°C and a die temperature of 60°C, to manufacture a 1.5 mm thick molded article (transmissive resin member I) as illustrated in Fig. 3.

### <Molding of Absorptive Resin Member>

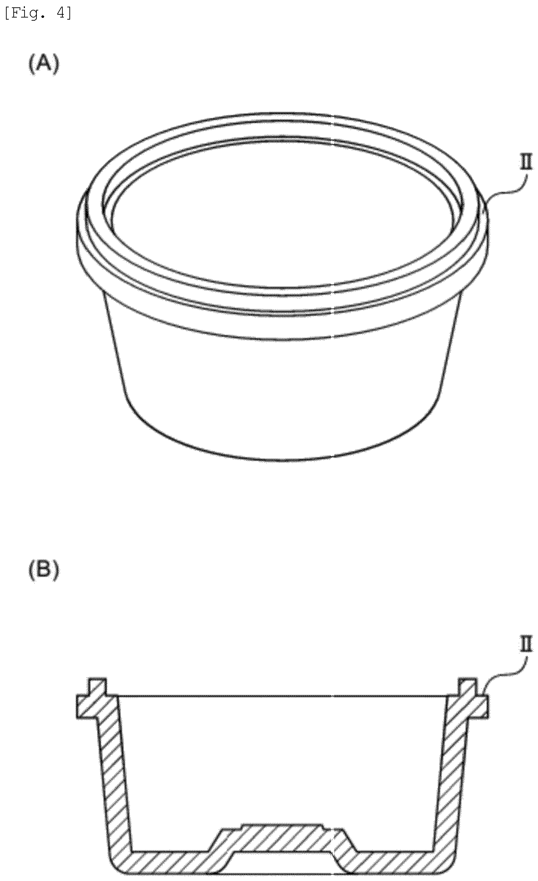

The resin pellet obtained in Example B was dried at 120°C for 7 hours, and then injection-molded with use of an injection molding machine ("J55", from the Japan Steel Works, Ltd.), at a cylinder temperature of 260°C and a die temperature of 60°C, to manufacture a 1.5 mm thick molded article (absorptive resin member II) as illustrated in Fig. 4.

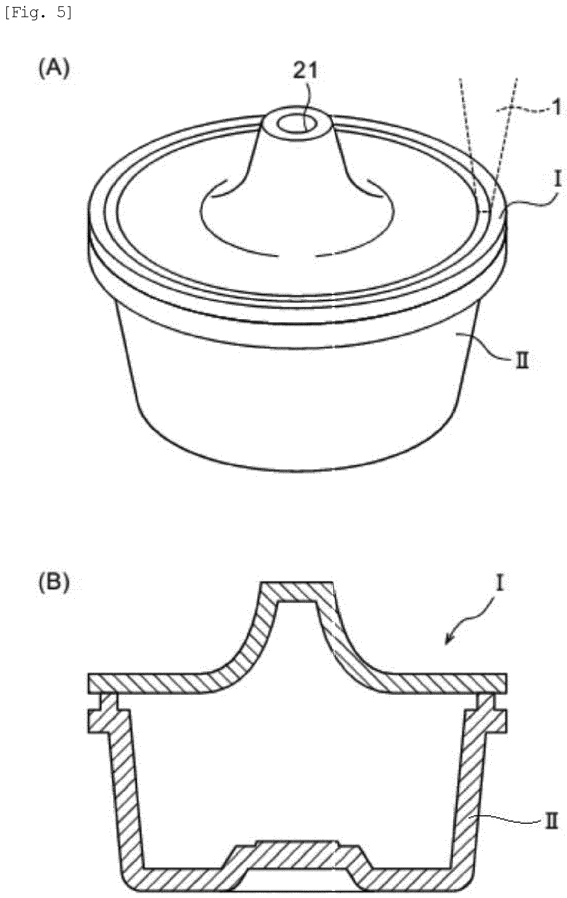

The transmissive resin member and the absorptive resin member were selected according to the combination summarized in Tables 6 to 8, drilled to form holes 21, 22 respectively as illustrated in Fig. 5, the box-like absorptive resin member II and the lid-like transmissive resin member I were stacked while placing inside thereof jigs 23, 24 for measuring weld strength. A laser light source was arranged above a flange part which is an overlapped portion of the transmissive resin member I and the absorptive resin member II, and the laser was irradiated thereon according to the conditions summarized in Tables 6 to 8, while pressurizing with use of glass plates the overlapped portion of the transmissive resin member I and the absorptive resin member II, from both side inwardly in the thickness direction under a pressing force (pressing force during welding) of 4.92 N/mm, to obtain a laser-welded article. Reference numeral 1 in Fig. 5 denotes a part irradiated with the laser.

A welding apparatus is as follows.

### <Galvano-Scanning Laser Welding>

Laser apparatus: YLR-300-AC-Y14, from IPG Photonics Corporation
Wavelength: 1070 nm
Collimator: 7.5 mm
Laser type: fiber
Laser output: 150 W, 180 W
Galvano scanner: Fiber Elephants 21, from ARGES GmbH
Aperture: 21 mm
Laser irradiation speed: 900 mm/s
Number of laps of laser irradiation: 10 to 50 laps
Circumference of welding portion: 137 mm

Position of the laser scanner was adjusted by defocusing the laser light so as to give a spot diameter of 2 mm on the weld face.

### <Scanning Laser Welding>

Welding conditions are as follows.
Laser welder: FD-2330, from Fine Device Co., Ltd.
Wavelength: 940 nm
Output: 30 to 120 W
Spot diameter: 2.1 mm
Scanning speed: 60 mm/s
Scanning distance: 137 mm (1 lap)

The obtained laser-welded article was subjected to measurement of laser weld strength, as described below.

### <Laser Weld Strength>

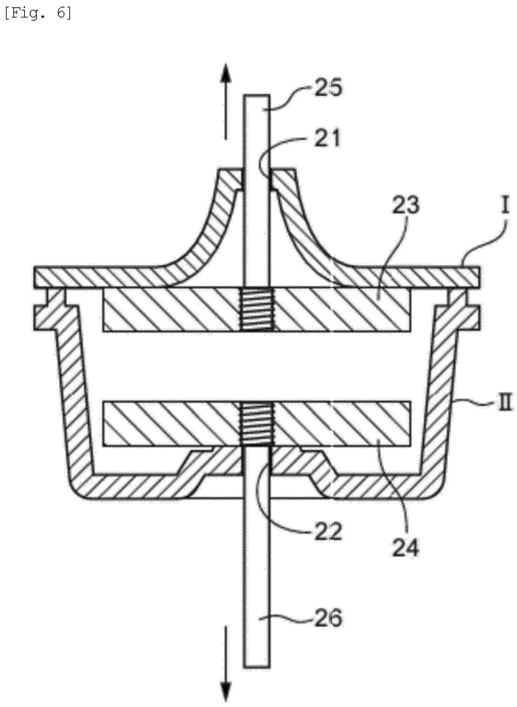

As illustrated in Fig. 6, measurement jigs 25, 26 were inserted respectively through the top face and the bottom face of the box composed of the transmissive resin member I and the absorptive resin member II manufactured above, and respectively joined with the jigs 23, 24 housed in the box. The jigs were then pulled upward and downward (tensile speed: 5 mm/min), and a strength at which the transmissive resin member I and the absorptive resin member II separate (weld strength) was measured.

The apparatus used herein was a 1t Tensilon universal test machine (10 kN loadcell) from ORIENTEC Co., Ltd.

Results are summarized in Table below.

### <Retention of Weld Strength>

The welded article welded as described above was then treated in a pressure cooker tester (EH8-221M, from ESPEC Corporation) at 121°C, 100% relative humidity, under a pressure of 2 atm for 50 hours, conditioned in an environment of 23°C and 50% relative humidity, and subjected to measurement of weld strength (after 50-hour treatment) by the aforementioned method (in N). Retention of The weld strength was calculated (in %). Retention of Weld Strength (%) = [(Weld strength after PCT 100 - hour treatment)/(initial weld strength)] × 100

The unit was given in %.

**[Table 6]**

| | | | Example C-1 | Reference Example C-1 | Example C-2 | Reference Example C-2 | Example C-3 | Reference Example C-3 | Example C-4 | Reference Example C-4 | Example C-5 | Reference Example C-5 |
|---|---|---|---|---|---|---|---|---|---|---|---|---|
| Transmissive resin composition | | | Example A-1 | Example A-1 | Example A-1 | Example A-1 | Example A-1 | Example A-1 | Example A-1 | Example A-1 | Example A-1 | Example A-1 |
| Absorptive resin composition | | | Example B-1 | Example B-1 | Example B-2 | Example B-2 | Example B-3 | Example B-3 | Comparative Example B-1 | Comparative Example B-1 | Example B-2 | Example B-2 |

| | Welding condition | Irradiation energy (J/mm) | | | | | | | | | | |
|---|---|---|---|---|---|---|---|---|---|---|---|---|
| | 150 W - 900 mm/s (10 laps) | 1.7 | 1253 | - | - | - | - | - | - | - | - | - |
| | 150 W - 900 mm/s (15 laps) | 2.5 | 1680 | - | - | - | - | - | - | - | - | - |
| | 150 W - 900 mm/s (20 laps) | 3.3 | 1861 | - | - | - | - | - | - | - | - | - |
| | 150 W - 900 mm/s (25 laps) | 4.2 | 2279 | - | - | - | - | - | - | - | - | - |
| | 150 W - 900 mm/s (30 laps) | 5.0 | 2491 | - | - | - | - | - | - | - | - | - |
| Galvano-scanning laser weld strength (N) | 180 W - 900 mm/s (10 laps) | 2.0 | - | - | 2006 | - | 2130 | - | 1692 | - | 1904 | - |
| | 180 W - 900 mm/s (20 laps) | 4.0 | 2526 | - | 2760 | - | 2670 | - | 2482 | - | 2396 | - |
| | 180 W - 900 mm/s (30 laps) | 6.0 | 2538 | - | 2578 | - | 2502 | - | 2480 | - | - | - |
| | 180 W - 900 mm/s (40 laps) | 8.0 | 2290 | - | - | - | - | - | - | - | - | - |
| | 195 W - 900 mm/s (50 laps) | 10.8 | - | - | - | - | - | - | - | - | - | - |
| Scanning laser weld strength (N) | 30 W - 60 mm/s (1 lap) | 0.5 | - | 0 | - | 0 | - | 0 | - | 0 | - | 0 |
| | 60 W - 60 mm/s (1 lap) | 1.0 | - | 2272 | - | 2322 | - | 2412 | - | 2052 | - | 2304 |
| | 90 W - 60 mm/s (1 lap) | 1.5 | - | 2890 | - | 2286 | - | 2592 | - | 2442 | - | 2324 |
| | 120 W - 60 mm/s (1 lap) | 2.0 | - | 776 | - | 728 | - | 756 | - | 654 | - | 728 |
| Retention of weld strength after (120°C×2 atm×100%RH, 50 h) treatment (%) | Galvano scanning 180 W-900 mm/w (30 laps) | | 60.6 | - | 74.0 | - | 69.5 | - | 64.5 | - | - | - |
| | Scanning 90 W-60 mm/s (1 lap) | | - | 55.6 | - | 69.2 | - | 65.9 | - | 56.9 | - | - |

**[Table 7]**

| | | | Example C-6 | Example C-7 | Reference Example C-6 | Example C-8 | Reference Example C-7 | Reference Example C-8 | Example C-9 | Example C-10 |
|---|---|---|---|---|---|---|---|---|---|---|
| Transmissive resin composition | | | Example A-2 | Example A-2 | Comparative Example A-1 | Example A-2 | Example A-2 | Comparativ e Example A-2 | Example A-3 | Example A-3 |
| Absorptive resin composition | | | Example B-4 | Comparative Example B-3 | Comparative Example B-3 | Example B-5 | Example B-5 | Comparativ e Example B-4 | Example B-3 | Example B-1 |
| | Welding condition | Irradiation energy (J/mm) | | | | | | | | |
| | 150 W - 900 mm/s (10 laps) | 1.7 | - | - | - | - | - | - | - | - |
| | 150 W - 900 mm/s (15 laps) | 2.5 | - | - | - | - | - | - | - | - |
| | 150 W - 900 mm/s (20 laps) | 3.3 | - | - | - | - | - | - | - | - |
| | 150 W - 900 mm/s (25 laps) | 4.2 | - | - | - | - | - | - | - | - |
| Galvano-scanning laser weld strength (N) | 150 W - 900 mm/s (30 laps) | 5.0 | - | - | - | - | - | - | - | - |
| | 180 W - 900 mm/s (10 laps) | 2.0 | - | - | - | - | - | - | - | - |
| | 180 W - 900 mm/s (20 laps) | 4.0 | 2532 | 2414 | 2142 | - | - | - | - | - |
| | 180 W - 900 mm/s (30 laps) | 6.0 | 2504 | 2448 | 2403 | 2232 | - | 1718 | - | - |
| | 180 W - 900 mm/s (40 laps) | 8.0 | - | - | - | - | - | - | - | - |
| | 195 W - 900 mm/s (50 laps) | 10.8 | - | - | - | - | - | - | 2262 | 2070 |
| Scanning laser weld strength (N) | 30 W - 60 mm/s (1 lap) | 0.5 | - | - | - | - | - | - | - | - |
| | 60 W - 60 mm/s (1 lap) | 1.0 | - | - | - | - | - | - | - | - |
| | 90 W - 60 mm/s (1 lap) | 1.5 | - | - | - | - | 2692 | - | - | - |
| | 120 W - 60 mm/s (1 lap) | 2.0 | - | - | - | - | - | - | - | - |
| Retention of weld strength after (120°C×2 atm×100%RH, 50 h) treatment (%) | Galvano scanning 180 W-900 mm/w (30 laps) | | 78.0 | 54.5 | 50.9 | 48.7 | - | - | - | - |
| | Scanning 90 W-60 mm/s (1 lap) | | - | - | - | - | 46.3 | - | - | - |

**[Table 8]**

| | | | Reference Example C-9 | Example C-11 | Example C-12 | Example C-13 | Reference Example C-10 | Reference Example C-11 | Reference Example C-12 |
|---|---|---|---|---|---|---|---|---|---|
| Transmissive resin composition | | | Comparative Example A-3 | Example A-1 | Example A-1 | Example A-1 | Example A-1 | Example A-1 | Example A-1 |
| Absorptive resin composition | | | Comparative Example B-2 | Example B-6 | Example B-7 | Example B-8 | Example B-6 | Example B-7 | Example B-8 |
| | Welding condition | Irradiation energy (J/mm) | | | | | | | |
| | 150 W - 900 mm/s (10 laps) | 1.7 | - | | | | | | |
| | 150 W - 900 mm/s (15 laps) | 2.5 | - | | | | | | |
| | 150 W - 900 mm/s (20 laps) | 3.3 | - | | | | | | |
| | 150 W - 900 mm/s (25 laps) | 4.2 | - | | | | | | |
| | 150 W - 900 mm/s (30 laps) | 5.0 | - | | | | | | |
| Galvano-scanning laser weld strength (N) | 180 W - 900 mm/s (10 laps) | 2.0 | - | 2142 | 2072 | 1725 | | | |
| | 180 W - 900 mm/s (20 laps) | 4.0 | - | 2794 | 2750 | 2576 | | | |
| | 180 W - 900 mm/s (30 laps) | 6.0 | - | 2644 | 2550 | 2512 | | | |
| | 180 W - 900 mm/s (40 laps) | 8.0 | - | | | | | | |
| | 195 W - 900 mm/s (50 laps) | 10.8 | 1902 | | | | | | |
| Scanning laser weld strength (N) | 30 W - 60 mm/s (1 lap) | 0.5 | - | | | | 0 | 0 | 0 |
| | 60 W - 60 mm/s (1 lap) | 1.0 | - | | | | 2317 | 2308 | 2289 |
| | 90 W - 60 mm/s (1 lap) | 1.5 | - | | | | 2222 | 2251 | 2130 |
| | 120 W - 60 mm/s (1 lap) | 2.0 | - | | | | 921 | 767 | 648 |
| Retention of weld strength after (120°C×2 atm×100%RH, 50 h) treatment (%) | Galvano scanning 180 W-900 mm/w (30 laps) | | - | 75.2 | 76.0 | 69.3 | - | - | - |
| | Scanning 90 W-60 mm/s (1 lap) | | - | - | - | - | - | - | - |

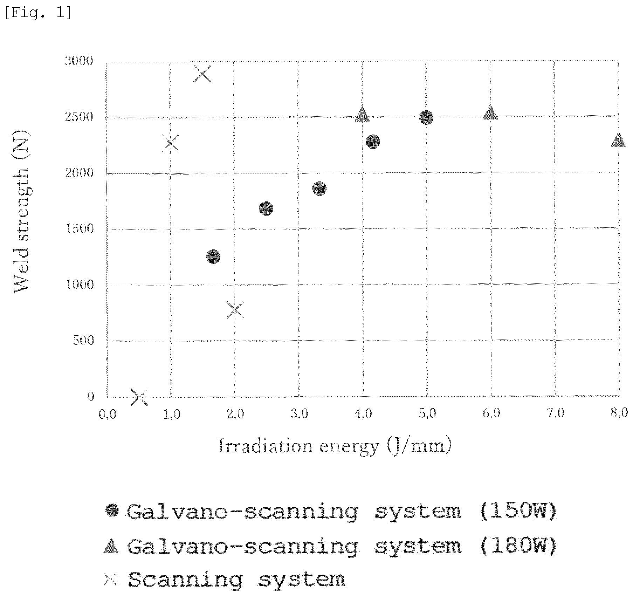

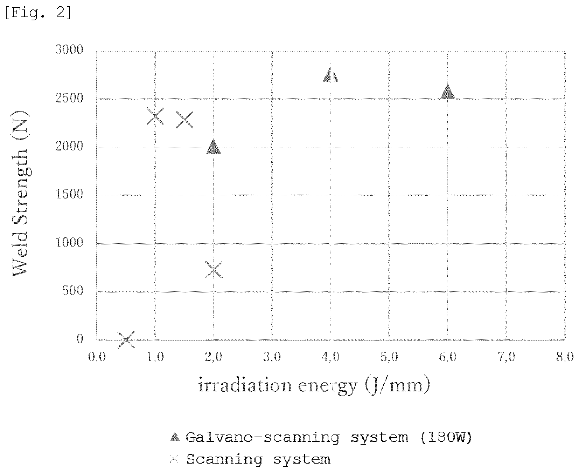

Data of Example C-1 and Reference Example C-1 were summarized in Fig. 1, and data of Example C-2 and Reference Example C-2 were summarized in Fig. 2.

As is clear from the results, the cases with use of the resin composition of this invention were found to demonstrate good Galvano-scanning laser weldability, enhanced weld strength, and large retention thereof.

In contrast, the cases where a conventional scanning laser welding was employed rather than Galvano-scanning laser welding, or the cases where the resin composition of this invention was not used, were found to degrade the weld strength, or retention thereof.

### Example A': Manufacture of Laser-Transmissive Resin Composition (Example A-4)

A pellet of a resin composition was obtained in the same way as in Example A-1, except that the thermoplastic resin was changed as summarized in Table 9.

### <Counter Gate Side Transmittance>

A flat test specimen for measurement of transmittance, with a size of 60 mm×60 mm×1.5 mm thick, was obtained by injection molding, in the same way as in Example A-1. The counter gate side transmittance was measured in the same way as in Example A-1. Results were summarized in Table 9, together with results of Example A-1.

### <Measurement of Transmittance>

Each of the pellets of the resin compositions obtained in Examples A-1, A-4 was dried at 120°C for 7 hours, and then injection-molded with used of an injection molding machine ("NEX80-9E", from Nissei Plastic Industrial Co., Ltd.) at a cylinder temperature of 260°C, a die temperature of 60°C, and under injection conditions below, to manufacture a 100 mm×100 mm×1.0 mm thick flat test specimen for measurement of transmittance.

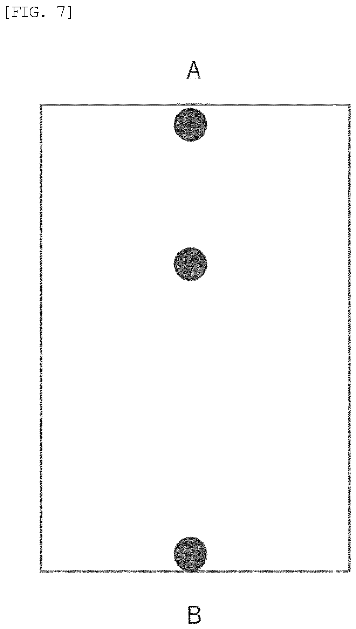

The transmittance on the counter gate side was then measured with use of a transmittance measuring instrument "TMG3" from LPKF AG, on the gate side, at the center part, and on the counter gate side. Fig. 7 is a schematic drawing illustrating positions of the gate side, the center part, and the counter gate side of the plate, wherein "A" denotes the gate side, and "B" denotes the counter gate side. Difference of transmittance between the gate side and the counter gate side was also calculated.
Wave length: 980 nm
Diameter of sensor opening: 3 mm
Focal diameter of laser beam: 1.2 mm

**[Table 9]**

| | | | Example A-1 | Example A-4 |
|---|---|---|---|---|
| | Polyester resin | PBT | 100 | 70 |
| | Polycarbonate resin | PC | | 30 |
| | Epoxy compound | EP 1 | 1.47 | 1.47 |
| | | EP 2 | | |
| Chemical composition of resin composition for transmissive member | Glass fiber | GF 1 | 44.0 | 44.0 |
| | Phenolic stabilizer | | 0.29 | 0.29 |
| | Phosphorus-containing stabilizer | | | 0.11 |
| | Mold releasing agent | | 0.44 | 0.44 |
| | Carbon black masterbatch | | | |
| | Colorant | DY1 | 0.13 | 0.13 |
| | | DY2 | 0.15 | 0.15 |
| | | DY3 | 0.12 | 0.12 |
| Transmittance of transmissive member (1) | 60 mm×60 mm×1.5 mmt | % | 29.0 | 70.7 |
| | Counter gate side transmittance | | | |
| Transmittance of transmissive member (2) | 100 mm×100 mm×1 mmt | % | 22.9 | 84.3 |
| | Counter gate side transmittance | | | |
| | 100 mm×100 mm×1 mmt | % | 19.3 | 64.5 |
| | Center transmittance | | | |
| | 100 mm×100 mm×1 mmt | % | 16.3 | 25.6 |
| | Gate side transmittance | | | |
| | 100 mm×100 mm×1 mmt | % | 6.6 | 58.7 |
| | Difference of transmittance (counter gate - gate) | | | |

### REFERENCE SIGNS LIST

21, 22 hole
23, 24 measurement jig
25, 26 measurement jig

## Claims

1. A resin composition for Galvano-scanning laser welding, containing 0.1 to 20 parts by mass of a reactive compound, per 100 parts by mass of a thermoplastic resin, wherein the reactive compound contains an epoxy group-containing elastomer.

2. The resin composition of claim 1, wherein the epoxy group-containing elastomer demonstrates a melt flow rate (MFR), measured in compliance with JIS K7210 at 190°C under 2.16 kgf load, of smaller than 10 g/10 min.

3. The resin composition of claim 1 or 2, wherein the thermoplastic resin contains a polyester-based resin.

4. The resin composition of claim 3, wherein the polyester-based resin contains polybutylene terephthalate resin.

5. The resin composition of claim 3 or 4, further containing a polycarbonate resin.

6. The resin composition of any one of claims 1 to 5, further containing an inorganic filler.

7. The resin composition of claim 6, wherein the inorganic filler contains a glass fiber.

8. The resin composition of claims 1 to 7, further containing a colorant.

9. The resin composition of claim 8, wherein the colorant is a light-transmissive colorant.

10. The resin composition of claim 9, wherein the light-transmissive colorant contains a black colorant and/or a black colorant composition.

11. The resin composition of claim 9 or 10, demonstrating, when injection-molded into a 60 mm×60 mm×1.5 mm specimen, a difference between transmittance values of 1064 nm wavelength light, measured at positions 15 mm and 45 mm away from a gate, of 2.1% or larger.

12. The resin composition of claim 8, wherein the colorant is a light-absorptive colorant.

13. The resin composition of claim 12, wherein the light-absorptive colorant contains carbon black.

14. A formed article formed of a resin composition described in any one of claims 1 to 13.

15. A kit for Galvano-scanning laser welding, comprising a transmissive resin composition and a light-absorptive resin composition, and
at least either the transmissive resin composition or the light-absorptive resin composition being a resin composition described in any one of claims 1 to 13.

16. The kit for Galvano-scanning laser welding of claim 15, wherein the transmissive resin composition is a resin composition described in any one of claims 1 to 11, and the light-absorptive resin composition is a resin composition described in claim 12 or 13.

17. A car-borne camera component formed of a resin composition described in any one of claims 1 to 13, or formed of a kit described in claim 15 or 16.

18. A car-borne camera module comprising a car-borne camera component described in claim 17.

19. A UV exposed article formed of a resin composition described in any one of claims 1 to 13, or formed of a kit described in claim 15 or 16.

20. The UV exposed article of claim 19, being a car-borne camera component, a case of millimeter-wave radar for in-vehicle and/or outside-vehicle installation, a case of electric parking brake, or a case of a sensor case.

21. A method for manufacturing a formed article, the method comprising welding a transmissive resin member and an absorptive resin member by Galvano-scanning laser welding,
at least either the transmissive resin member or the absorptive resin member being formed of a resin composition described in any one of claims 1 to 13.

22. The method for manufacturing a formed article of claim 21, wherein the transmissive resin member is a transmissive resin member formed of a resin composition described in any one of claims 1 to 11, and the absorptive resin member is an absorptive resin member formed of the resin composition described in claim 12 or 13.

## Patentansprüche

1. Harzzusammensetzung für das Galvano-Scanning-Laserschweißen, enthaltend 0,1 bis 20 Masseteile einer reaktiven Verbindung pro 100 Masseteile eines thermoplastischen Harzes, wobei die reaktive Verbindung ein epoxidgruppenhaltiges Elastomer enthält.

2. Harzzusammensetzung gemäß Anspruch 1, wobei das epoxidgruppenhaltige Elastomer eine Schmelzflussrate (MFR) kleiner als 10 g/10 min, gemessen gemäß JIS K7210 bei 190°C unter einer Last von 2,16 kgf, aufweist.

3. Harzzusammensetzung gemäß Anspruch 1 oder 2, wobei das thermoplastische Harz ein polyesterbasiertes Harz enthält.

4. Harzzusammensetzung gemäß Anspruch 3, wobei das polyesterbasierte Harz Polybutylenterephthalat-Harz enthält.

5. Harzzusammensetzung gemäß Anspruch 3 oder 4, ferner enthaltend ein Polycarbonat-Harz.

6. Harzzusammensetzung gemäß einem der Ansprüche 1 bis 5, ferner enthaltend einen anorganischen Füllstoff.

7. Harzzusammensetzung gemäß Anspruch 6, wobei der anorganische Füllstoff eine Glasfaser enthält.

8. Harzzusammensetzung gemäß den Ansprüchen 1 bis 7, ferner enthaltend ein Farbmittel.

9. Harzzusammensetzung gemäß Anspruch 8, wobei das Farbmittel ein lichtdurchlässiges Farbmittel ist.

10. Harzzusammensetzung gemäß Anspruch 9, wobei das lichtdurchlässige Farbmittel ein schwarzes Farbmittel und/oder eine schwarze Farbmittelzusammensetzung enthält.

11. Harzzusammensetzung gemäß Anspruch 9 oder 10, die, wenn sie in eine 60 mm × 60 mm × 1,5 mm große Probe spritzgegossen wird, einen Unterschied zwischen den Transmissionswerten von Licht mit einer Wellenlänge von 1064 nm, gemessen an Positionen 15 mm und 45 mm vom Anguss entfernt, von 2,1% oder mehr aufweist.

12. Harzzusammensetzung gemäß Anspruch 8, wobei das Farbmittel ein lichtabsorbierendes Farbmittel ist.

13. Harzzusammensetzung gemäß Anspruch 12, wobei das lichtabsorbierende Farbmittel Ruß enthält.

14. Formkörper, gebildet aus einer Harzzusammensetzung, wie in einem der Ansprüche 1 bis 13 beschrieben.

15. Kit für das Galvano-Scanning-Laserschweißen, umfassend eine lichtdurchlässige Harzzusammensetzung und eine lichtabsorbierende Harzzusammensetzung, wobei
mindestens entweder die lichtdurchlässige Harzzusammensetzung oder die lichtabsorbierende Harzzusammensetzung eine Harzzusammensetzung, wie in einem der Ansprüche 1 bis 13 beschrieben, ist.

16. Kit für das Galvano-Scanning-Laserschweißen gemäß Anspruch 15, wobei die lichtdurchlässige Harzzusammensetzung eine Harzzusammensetzung, wie in einem der Ansprüche 1 bis 11 beschrieben, ist und die lichtabsorbierende Harzzusammensetzung eine Harzzusammensetzung, wie in Anspruch 12 oder 13 beschrieben, ist.

17. Fahrzeug-Kamerakomponente, gebildet aus einer Harzzusammensetzung, wie in einem der Ansprüche 1 bis 13 beschrieben, oder gebildet aus einem Kit, wie in Anspruch 15 oder 16 beschrieben.

18. Fahrzeug-Kameramodul, umfassend eine Fahrzeug-Kamerakomponente, wie in Anspruch 17 beschrieben.

19. UV-exponierter Gegenstand, gebildet aus einer Harzzusammensetzung, wie in einem der Ansprüche 1 bis 13 beschrieben, oder gebildet aus einem Kit, wie in Anspruch 15 oder 16 beschrieben.

20. UV-exponierter Gegenstand gemäß Anspruch 19, der eine Fahrzeugkamera-Komponente, ein Gehäuse für ein Millimeterwellenradar zur Installation im Fahrzeug und/oder außerhalb des Fahrzeugs, ein Gehäuse für eine elektrische Parkbremse oder ein Gehäuse für einen Sensor ist.

21. Verfahren zur Herstellung eines Formkörpers, wobei das Verfahren das Verschweißen eines lichtdurchlässigen Harzelements und eines absorbierenden Harzelements durch Galvano-Scanning-Laserschweißen umfasst,
wobei mindestens entweder das lichtdurchlässige Harzelement oder das absorbierende Harzelement aus einer Harzzusammensetzung, wie in einem der Ansprüche 1 bis 13 beschriebenen, gebildet ist.

22. Verfahren zur Herstellung eines Formkörpers gemäß Anspruch 21, wobei das lichtdurchlässige Harzelement ein lichtdurchlässiges Harzelement, gebildet aus einer Harzzusammensetzung, wie in einem der Ansprüche 1 bis 11 beschriebenen, ist und das absorbierende Harzelement ein absorbierendes Harzelement, gebildet aus einer Harzzusammensetzung, wie in Anspruch 12 oder 13 beschriebenen, ist.

## Revendications

1. Une composition de résine pour le soudage laser à balayage galvanique, contenant de 0,1 à 20 parties en masse d'un composé réactif pour 100 parties en masse d'une résine thermoplastique, dans laquelle le composé réactif contient un élastomère contenant un groupe époxy.

2. La composition de résine de la revendication 1, dans laquelle l'élastomère contenant un groupe époxy présente un indice de fluidité à chaud (MFR), mesuré conformément avec JIS K7210 à 190 °C sous une charge de 2,16 kgf, inférieur à 10 g/10 min.

3. La composition de résine de la revendication 1 ou 2, dans laquelle la résine thermoplastique contient une résine à base de polyester.

4. La composition de résine de la revendication 3, dans laquelle la résine à base de polyester contient une résine de polybutylène téréphtalate.

5. La composition de résine de la revendication 3 ou 4, contenant en outre une résine de polycarbonate.

6. La composition de résine de l'une quelconque des revendications 1 à 5, contenant en outre une charge inorganique.

7. La composition de résine de la revendication 6, dans laquelle la charge inorganique contient une fibre de verre.

8. La composition de résine des revendications 1 à 7, contenant en outre un colorant.

9. La composition de résine de la revendication 8, dans laquelle le colorant est un colorant transmettant la lumière.

10. La composition de résine de la revendication 9, dans laquelle le colorant transmettant la lumière contient un colorant noir et/ou une composition de colorant noir.

11. La composition de résine de la revendication 9 ou 10, présentant, lorsqu'elle est moulée par injection dans un échantillon de 60 mm × 60 mm × 1,5 mm, une différence entre les valeurs de transmittance de la lumière d'une longueur d'onde de 1064 nm, mesurées à des positions situées à 15 mm et 45 mm d'une entrée, de 2,1 % ou plus.

12. La composition de résine de la revendication 8, dans laquelle le colorant est un colorant absorbant la lumière.

13. La composition de résine de la revendication 12, dans laquelle le colorant absorbant la lumière contient du noir de carbone.

14. Un article formé à partir d'une composition de résine décrite dans l'une quelconque des revendications 1 à 13.

15. Un kit pour le soudage laser à balayage galvanique, comprenant une composition de résine transmissive et une composition de résine absorbant la lumière, et au moins l'une des compositions de résine transmissive ou de résine absorbant la lumière étant une composition de résine décrite dans l'une quelconque des revendications 1 à 13.

16. Le kit pour le soudage laser à balayage galvanique de la revendication 15, dans lequel la composition de résine transmissive est une composition de résine décrite dans l'une quelconque des revendications 1 à 11, et la composition de résine absorbant la lumière est une composition de résine décrite dans la revendication 12 ou 13.

17. Un composant de caméra embarquée dans un véhicule automobile formé d'une composition de résine décrite dans l'une quelconque des revendications 1 à 13, ou formé d'un kit décrit dans la revendication 15 ou 16.

18. Un module de caméra embarquée dans un véhicule automobile comprenant un composant de caméra embarquée dans un véhicule automobile décrit dans la revendication 17.

19. Un article exposé aux UV formé d'une composition de résine décrite dans l'une quelconque des revendications 1 à 13, ou formé d'un kit décrit dans la revendication 15 ou 16.

20. L'article exposé aux UV de la revendication 19, étant un composant de caméra embarquée, un boîtier de radar à ondes millimétriques pour une installation à l'intérieur et/ou à l'extérieur d'un véhicule, un boîtier de frein de stationnement électrique ou un boîtier de capteur.

21. Un procédé de fabrication d'un article moulé, le procédé comprenant le soudage d'un élément en résine transmissive et d'un élément en résine absorbante par soudage laser à balayage galvanique, au moins l'un des éléments en résine transmissive ou en résine absorbante étant formé à partir d'une composition de résine décrite dans l'une quelconque des revendications 1 à 13.

22. Le procédé de fabrication d'un article moulé de la revendication 21, dans lequel l'élément en résine transmissive est un élément en résine transmissive formé à partir d'une composition de résine décrite dans l'une quelconque des revendications 1 à 11, et l'élément en résine absorbante est un élément en résine absorbante formé à partir de la composition de résine décrite dans la revendication 12 ou 13.
